(19)

Europäisches Patentamt
European Patent Office
Office européen des brevets

(11) **EP 4 575 741 A1**

(12) **EUROPEAN PATENT APPLICATION**
published in accordance with Art. 153(4) EPC

(43) Date of publication:
**25.06.2025  Bulletin 2025/26**

(21) Application number: **23868477.3**

(22) Date of filing: **11.09.2023**

(51) International Patent Classification (IPC):
**G06F 3/04883** (2022.01)   **G06F 3/041** (2006.01)
**H04M 1/72448** (2021.01)   **G06F 3/04847** (2022.01)
**G06F 3/0488** (2022.01)   **G06F 1/16** (2006.01)
**H04M 1/02** (2006.01)

(52) Cooperative Patent Classification (CPC):
**G06F 3/0488; G06F 1/16; G06F 1/1652;**
**G06F 1/1677; G06F 1/1694; G06F 3/041;**
**G06F 3/04847; G06F 3/04883; H04M 1/0243;**
**H04M 1/72448;** G06F 2203/04803

(86) International application number:
**PCT/KR2023/013606**

(87) International publication number:
**WO 2024/063423 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **23.09.2022  KR 20220120907**

(71) Applicant: **Samsung Electronics Co., Ltd.
Suwon-si, Gyeonggi-do 16677 (KR)**

(72) Inventors:
  • **MOON, Minjeong
    Suwon-si Gyeonggi-do 16677 (KR)**

  • **MOON, Yeojin
    Suwon-si Gyeonggi-do 16677 (KR)**
  • **LEE, Bona
    Suwon-si Gyeonggi-do 16677 (KR)**
  • **NAM, Myoungwoo
    Suwon-si Gyeonggi-do 16677 (KR)**
  • **PARK, Chanpyo
    Suwon-si Gyeonggi-do 16677 (KR)**
  • **LEE, Seungyong
    Suwon-si Gyeonggi-do 16677 (KR)**

(74) Representative: **HGF
HGF Limited
1 City Walk
Leeds LS11 9DX (GB)**

(54) **ELECTRONIC DEVICE FOR AT LEAST PARTIALLY ADJUSTING BRIGHTNESS OF DISPLAY ON BASIS OF TOUCH INPUT ON DISPLAY, AND METHOD THEREFOR**

(57)  An electronic device according to one embodiment can acquire data from a touch sensor while a screen based on first brightness is displayed in a display. The electronic device can identify, on the basis of at least one contact point identified by means of the data and related to a touch input performed on the display, whether the touch input corresponds to a designated gesture for adjusting the first brightness of the display. The electronic device can change, on the basis of the identification of the touch input corresponding to the designated gesture, to a second brightness that differs from the first brightness, the brightness of a first part on which at least one first visual object having a designated type is displayed from among a plurality of visual objects included in the screen.

FIG. 1

**Description**

**[Technical Field]**

The present disclosure relates to an electronic device for at least partially adjusting a brightness of a display on the basis of a touch input on the display, and a method therefor.

**[Background Art]**

An electronic device including a touch sensor for reacting to a touch input on a display is being developed. The electronic device may identify a gesture of tapping or dragging a visual object displayed through the display by using the touch sensor. Based on the gesture, the electronic device may execute a function mapped to the visual object.

**[Disclosure]**

**[Technical Solution]**

According to an embodiment, an electronic device may comprise a display, a touch sensor, memory storing instructions, and a processor. The instructions may be configured to, when executed by the processor, cause the electronic device to obtain data from the touch sensor, while displaying a screen based on a first brightness in the display. The instructions may be configured to, when executed by the processor, cause the electronic device to identify, based on at least one contact point associated with a touch input performed on the display that is identified by the data, whether the touch input is corresponding to a preset gesture to adjust the first brightness of the display. The instructions may be configured to, when executed by the processor, cause the electronic device to, based on identifying the touch input corresponding to the preset gesture, change, among a plurality of visual objects included in the screen, a brightness of a first portion where at least one first visual object having a preset type to a second brightness different from the first brightness.

According to an embodiment, a method of an electronic device may comprise obtaining, while displaying a screen based on a first brightness in a display of the electronic device, data from a touch sensor of the electronic device. The method may comprise identifying, based on at least one contact point associated with a touch input performed on the display that is identified by the data, whether the touch input is corresponding to a preset gesture to adjust the first brightness of the display. The method may comprise, based on identifying that the touch input is corresponding to the preset gesture to adjust the first brightness of the display, based on identifying the touch input corresponding to the preset gesture, changing, among a plurality of visual objects included in the screen, a brightness of a first portion where at least one first visual object having a preset type to a second brightness different from the first brightness.

According to an embodiment, an electronic device may comprise a display, a touch sensor, and a processor. The instructions may be configured to, when executed by the processor, cause the electronic device to obtain, while displaying a screen based on a first brightness in a display, data from the touch sensor. The instructions may be configured to, when executed by the processor, cause the electronic device to identify, based on the data, a preset gesture for at least partially covering the display. The instructions may be configured to, when executed by the processor, cause the electronic device to change, based on identifying the preset gesture in a first state that the display is folded along a folding axis in a preset angle range, a brightness of a first portion among portions of the display distinguished by the folding axis, to a second brightness different from the first brightness. The instructions may be configured to, when executed by the processor, cause the electronic device to change, based on identifying the preset gesture in a second state different from the first state, brightness of all of the portions to the second brightness.

According to an embodiment, a method of an electronic device may comprise obtaining, while displaying a screen based on a first brightness in a display of the electronic device, data from a touch sensor of the electronic device. The method may comprise identifying, based on the data, a preset gesture for at least partially covering the display. The method may comprise changing, based on identifying the preset gesture in a first state that the display is folded along a folding axis in a preset angle range, a brightness of a first portion among portions of the display distinguished by the folding axis, to a second brightness different from the first brightness. The method may comprise changing, based on identifying the preset gesture in a second state different from the first state, brightness of all of the portions to the second brightness.

**[Description of the Drawings]**

FIG. 1 is a block diagram of an electronic device, according to an embodiment.

FIG. 2 illustrates an example of an operation in which an electronic device changes a brightness of a display based on a touch input on the display, according to an embodiment.

FIG. 3A, FIG. 3B, and FIG. 3C illustrate an example of an operation in which an electronic device identifies a touch input on a display based on data of a touch sensor, according to an embodiment.

FIG. 4A to FIG. 4B illustrate an example of an operation in which an electronic device increases a brightness of at least a portion of a display based on a touch input on the display, according to an embodiment.

FIG. 5A to FIG. 5B illustrate an example of an operation in which an electronic device reduces a brightness of at least a portion of a display based on a touch input on the display, according to an embodiment.

FIG. 6 illustrates an example of different states of a housing and/or a display of an electronic device, according to an embodiment.

FIG. 7A, FIG. 7B, and FIG. 7C illustrate an example of an operation in which an electronic device changes a brightness of at least a portion of a display based on a shape of the display and/or a touch input on the display, according to an embodiment.

FIG. 8 illustrates an example of an operation in which an electronic device changes a brightness of at least a portion of a display based on a touch input on the display, according to an embodiment.

FIG. 9 illustrates an example of a flowchart for describing an operation of an electronic device, according to an embodiment.

FIG. 10 illustrates an example of a flowchart for describing an operation of an electronic device, according to an embodiment.

FIG. 11 illustrates an example of a flowchart for describing an operation of an electronic device, according to an embodiment.

FIG. 12 illustrates an example of a flowchart for describing an operation of an electronic device, according to an embodiment.

**[Mode for Invention]**

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

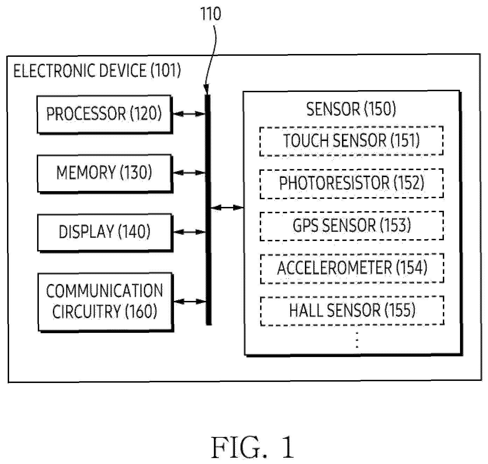

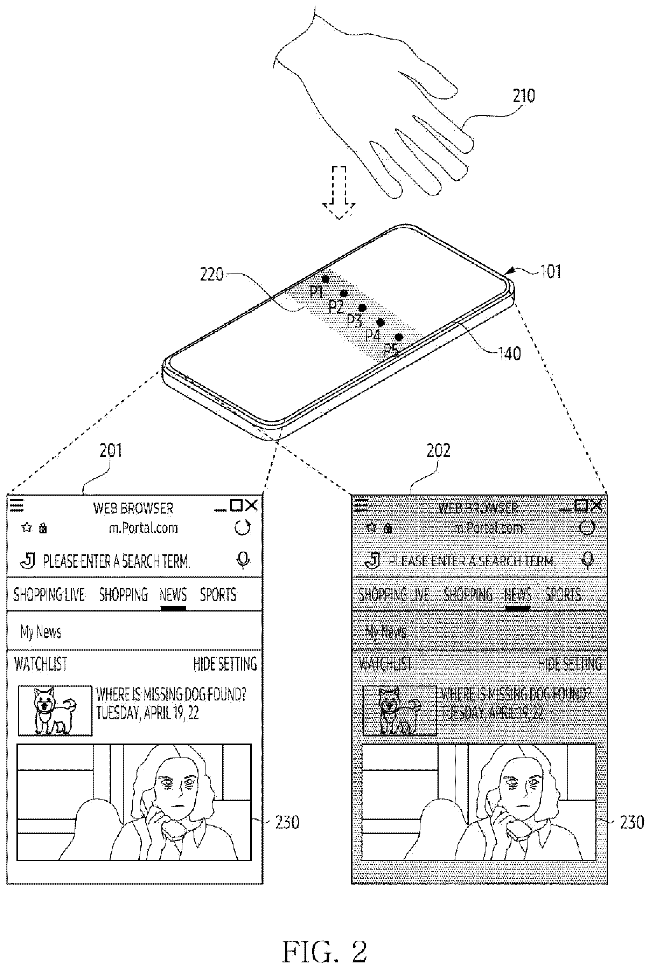

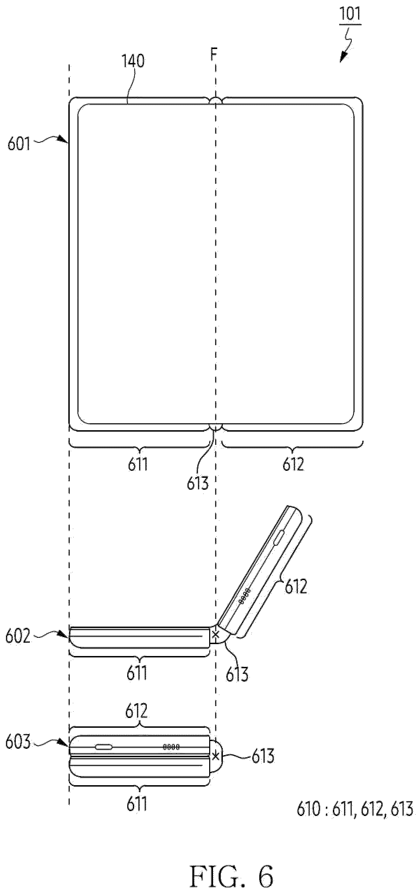

FIG. 1 is a block diagram of an electronic device 101, according to an embodiment. The electronic device 101 of FIG. 1 may include at least one of a processor 120, memory 130, a display 140, a sensor 150, or communication circuitry 160. The processor 120, the memory 130, the display 140, the sensor 150, and the communication circuit 160 may be electronically and/or operably coupled with each other by an electronic component such as a communication bus 110. Hereinafter, different hardware (or circuits) distinguished by blocks being operably coupled may mean that a direct connection or an indirect connection between the hardware is established by wire or wirelessly so that second hardware is controlled by first hardware among the hardware. Although illustrated based on different blocks, an embodiments is not limited thereto, and a plurality of hardware (e.g., combinations of the processor 120, the memory 130, the sensor 150, and/or the communication circuitry 160) may be included in a single integrated circuit such as a system on a chip (SoC). A type and/or the number of hardware components included in the electronic device 101 is not limited as illustrated in FIG. 1. An exemplary shape of the electronic device 101 including one or more hardware described with reference to FIG. 1 is described with reference to FIG. 2 and/or FIG. 6.

According to an embodiment, the processor 120 of the electronic device 101 may include hardware and/or circuitry for processing data based on one or more instructions. For example, the hardware and/or the circuitry for processing data may include an arithmetic and logic unit (ALU), a floating point unit (FPU), a field programmable gate array (FPGA), a central processing unit (CPU), and/or an application processor (AP). The number of the processors 120 may be one or more. For example, the processor 120 may have a structure of a multi-core processor such as a dual core, a quad core, or a hexa core.

According to an embodiment, the memory 130 of the electronic device 101 may include a hardware component for storing data and/or an instruction inputted and/or outputted to the processor 120. The memory 130 may include, for example, volatile memory such as random-access memory (RAM), and/or non-volatile memory such as read-only memory (ROM). The volatile memory may include, for example, at least one of dynamic RAM (DRAM), static RAM (SRAM), Cache RAM, and pseudo SRAM (PSRAM). The nonvolatile memory may include, for example, at least one of programmable ROM (PROM), erasable PROM (EPROM), electrically erasable PROM (EEPROM), flash memory, a hard disk, a compact disk, a solid state drive (SSD), and an embedded multi media card (eMMC).

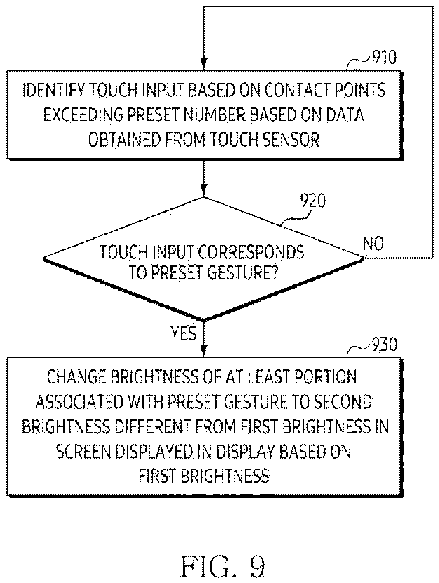

In the memory 130, one or more instructions (or commands) indicating a calculation and/or an operation to be performed by the processor 120 on data may be stored. A set of one or more instructions may be referred to as firmware, an operating system, a process, a routine, a subroutine, and/or an application. For example, the electronic device 101 and/or the processor 120 may perform at least one of operations of FIG. 9 to FIG. 12 when a set of a plurality of instructions distributed in a shape of the operating system, the firmware, a driver, and/or the application is executed. Hereinafter, an application being installed in the electronic device 101 may mean that one or more instructions provided in a shape of an application are stored in the memory 130 of the electronic device 101, and the one or more applications are stored in an executable format (e.g., a file having an extension preset by an operating system of the electronic device 101) by the processor 120 of the electronic device 101. According to an embodiment, The processor 120 of the electronic device 101 may perform an operation corresponding to a touch input on a surface of a housing of the electronic device 101 based on execution of one or more applications. In an example in which a plurality of applications are installed in the electronic device 101, the processor 120 of the electronic device 101 may execute the plurality of applications substantially simultaneously based on multitasking.

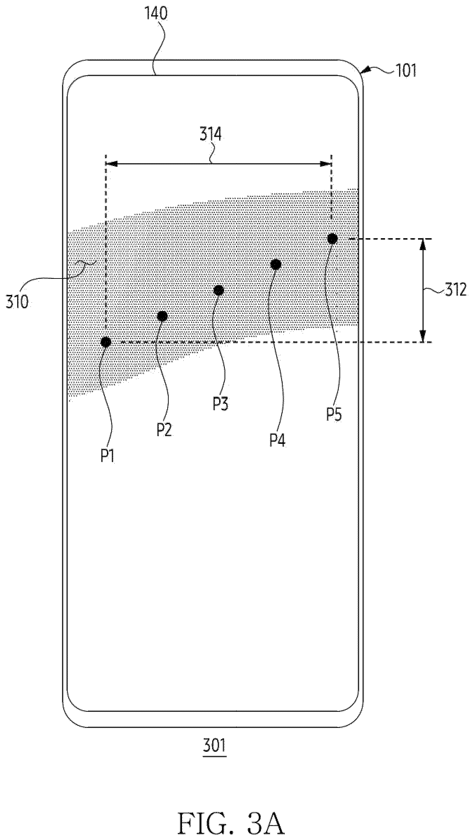

The display 140 of the electronic device 101 may output visualized information (e.g., at least one of screens of FIG. 3A to FIG. 5B and FIG. 7A to FIG. 8) to a user. For example, the display 140 may be controlled by the processor 120, and then output the visualized information to the user. The display 140 may include a flat panel display (FPD) and/or an electronic paper. The FPD may include a liquid crystal display (LCD), a plasma display panel (PDP), and/or one or more light emitting diodes (LEDs). The LED may include an organic LED (OLED).

The sensor 150 of the electronic device 101 may generate electronic information that may be processed by the processor 120 or stored in the memory 130 from non-electronic information associated with the electronic device 101. The electronic information generated by the sensor 150 may be referred to as data (e.g., sensor data) outputted from the sensor 150. Referring to FIG. 1, a touch sensor 151, a photoresistor 152, a global positioning system (GPS) sensor 153, an accelerometer 154, and/or a hall sensor 155 are illustrated as examples of the sensor 150 included in the electronic device 101. The sensor 150 included in the electronic device 101 is not limited to sensors illustrated by different blocks of FIG. 1. The sensor 150 may include circuitry (e.g., a sensor hub and/or a controller) for controlling the touch sensor 151, the photoresistor 152, the GPS sensor 153, the accelerometer 154, and/or the hall sensor 155.

According to an embodiment, the processor 120 of the electronic device 101 may identify a gesture generated by an external object contacted on the housing of the electronic device 101 and/or the display 140 based on data of the touch sensor 151. The gesture may be referred to as a touch input. The touch sensor 151 may be referred to as a touch sensor panel (TSP). The processor 120 may execute a function associated with a specific visual object selected by the touch input among visual objects being displayed in the display 140 in response to detecting the touch input.

According to an embodiment, the processor 120 of the electronic device 101 may identify a brightness of ambient light based on data of the photoresistor 152. The photoresistor 152 may be at least partially exposed through a surface (e.g., a front surface of the housing of the electronic device 101 on which the display 140 is disposed) of the housing of the electronic device 101. The photoresistor 152 may output the data indicating the brightness of the ambient light measured by at least a portion exposed on the surface.

According to an embodiment, the processor 120 of the electronic device 101 may identify a geographic location of the electronic device 101 based on data of the GPS sensor 153. The geographic location may include numerical values associated with latitude and/or longitude of a planet (e.g., the Earth) on which the electronic device 101 is disposed. In addition to the GPS method, the GPS sensor 153 may output data indicating the geographic location of the electronic device 101 based on a global navigation satellite system (GNSS) such as galileo and beidou (compass).

According to an embodiment, the processor 120 of the electronic device 101 may identify a physical movement of the electronic device 101 based on the accelerometer 154. The accelerometer 154 may output sensor data indicating a direction and/or magnitude of acceleration (e.g., gravitational acceleration) applied to the electronic device 101 by using a plurality of preset axes (e.g., an x-axis, a y-axis, and a z-axis) perpendicular to each other. Based on the sensor data indicating the acceleration, the processor 120 may identify the physical movement (e.g., a translation motion) of the electronic device 101. In addition to the accelerometer 154, the electronic device 101 may include a sensor that outputs data dependent on the physical movement of the electronic device 101, such as a geomagnetic sensor and/or a gyro sensor. For example, the geomagnetic sensor may output sensor data indicating a direction (e.g., a direction of a N pole) of a magnetic field applied to the electronic device 101 by using two-dimensional to three-dimensional axes. The gyro sensor may be included in the electronic device 101 to measure rotation of the electronic device 101. For example, the gyro sensor may output sensor data indicating a parameter (e.g., an angular velocity) indicating the rotation of the electronic device 101 based on the preset axes. The accelerometer 154, the geomagnetic sensor, the gyro sensor, or a combination thereof may be referred to as an inertia measurement unit (IMU).

According to an embodiment, the processor 120 of the electronic device 101 may identify a shape of the housing and/or the display 140 of the electronic device 101 by using the hall sensor 155. The hall sensor 155 may include a pair of a magnet and a magnetic field sensor that measure a change in a magnetic field formed by the magnet. The magnet of the hall sensor 155 and the magnetic field sensor of the hall sensor 155 may be disposed in different portions of the housing of the electronic device 101. Based on the change in the magnetic field measured by the magnetic field sensor, the hall sensor may identify a distance between the portions. In an embodiment in which the electronic device 101 includes a deformable housing, the electronic device 101 may identify the shape of the housing by using the hall sensor 155 including the magnet and the magnetic field sensor disposed in different portions of the housing. For example, the hall sensor 155 may output sensor data indicating the distance and/or the shape of the housing. An example of an operation in which the electronic device 101 identifies a shape of a housing and/or a flexible display using the hall sensor 155 is described with reference to FIG. 6.

Although, as an example of the sensor 150, the touch sensor 151, the photoresistor 152, the GPS sensor 153, the accelerometer 154, and/or the hall sensor 155 have been exemplarily described, an embodiment is not limited thereto. According to an embodiment, at least one of the sensor 150 of FIG. 1 may be omitted. According to an embodiment, the sensor 150 may additionally include a sensor (e.g., a grip sensor, at least one microphone, and/or a proximity sensor) not illustrated in FIG. 1.

According to an embodiment, the communication circuitry 160 of the electronic device 101 may include circuitry for supporting transmission and/or reception of an electronic signal between the electronic device 101 and a different external electronic device (e.g., a server). The communication circuitry 160 may include at least one of, for example, a MODEM, an antenna, and an optic/electronic (O/E) converter. The communication circuitry 160 may support the transmission and/or the reception of the electronic signal based on various types of a protocol such as ethernet, a local area network (LAN), a wide area network (WAN), wireless fidelity (WiFi), Bluetooth, Bluetooth low energy (BLE), ZigBee, long term evolution (LTE), and a 5G new radio (NR).

Although not illustrated, the electronic device 101 according to an embodiment may include an output means for outputting information in another shape other than a visualized shape. For example, the electronic device 101 may include a speaker for outputting an acoustic signal. For example, the electronic device 101 may include a motor for providing haptic feedback based on a vibration.

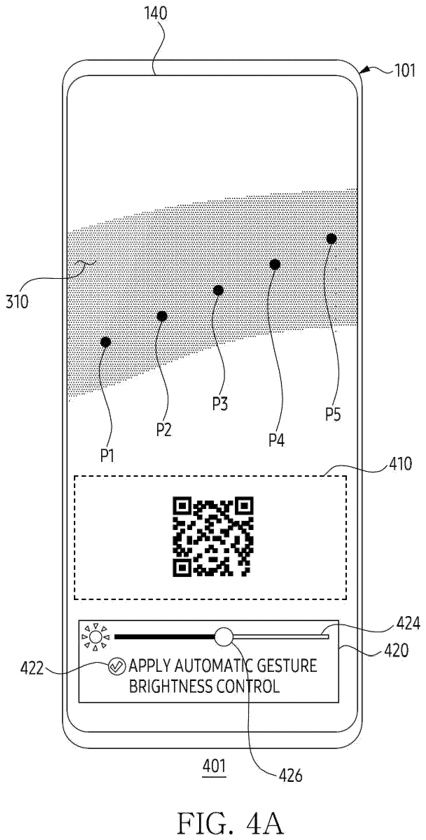

According to an embodiment, the processor 120 of the electronic device 101 may obtain data used to control the display 140 by using the sensor 150 while displaying a screen in the display 140. For example, in case of identifying a touch input on the display 140 using the touch sensor 151, the electronic device 101 may perform an operation corresponding to the touch input using the display 140. The operation may include an operation of changing a brightness of at least a portion of the screen displayed in the display 140. Changing the brightness of the at least a portion of the screen may be conditionally performed based on data from another sensor (e.g., the photoresistor 152, the GPS sensor 153, the accelerometer 154, and/or the hall sensor 155) different from the touch sensor 151. The touch input may include a gesture intuitively representing a user intention for at least partially changing a brightness of the display 140, such as a gesture covering at least a portion of the display 140. An operation in which the processor 120 of the electronic device 101 identifies the gesture based on data of the touch sensor 151 will be described with reference to FIG. 2, FIG. 3A to FIG. 3C. Based on the gesture, an operation of changing the brightness of at least a portion of the screen displayed in the display 140 will be described with reference to FIG. 4A to FIG. 5B and/or FIG. 7A to FIG. 8.

Hereinafter, an example of an operation in which the processor 120 of the electronic device 101 according to an embodiment identifies the gesture for changing the brightness of at least a portion of the screen displayed through the display 140 based on the data of the touch sensor 151 will be described with reference to FIG. 2.

FIG. 2 illustrates an example of an operation in which an electronic device 101 changes a brightness of a display 140 based on a touch input on the display 140, according to an embodiment. The electronic device 101 of FIG. 2 may be an example of the electronic device 101 of FIG. 1. For example, the electronic device 101 and the display 140 of FIG. 2 may include the electronic device 101 and the display 140 of FIG. 1.

Referring to FIG. 2, the electronic device 101 may be a terminal. The terminal may include, for example, a personal computer (PC) such as a laptop and a desktop, a smartphone, a smartpad, and/or a tablet PC. An embodiment is not limited to the example, and the terminal may include a smart accessory such as a smartwatch and/or a head-mounted device (HMD). The electronic device 101 may display at least one screen corresponding to at least one application in a display area of the display 140. Hereinafter, a screen may mean a user interface (UI) displayed in at least a portion of the display 140. The screen may include, for example, an activity of an android operating system.

Referring to FIG. 2, states 201 and 202 in which the electronic device 101 displays a screen in the display 140 according to an embodiment are illustrated. The states 201 and 202 in which the electronic device 101 displays a screen based on execution of an application (e.g., a web browser application) for displaying a web page are illustrated, but an embodiment is not limited thereto. In the state 201, the electronic device 101 may display a screen including the web page, by controlling the display 140 based on a first brightness. The first brightness may be a representative value (e.g., a maximum value, a minimum value, and/or an average value) of a brightness of pixels included in the display 140. The electronic device 101 may change a brightness of all of the pixels in the display 140 to other brightness different from the first brightness based on data of a photoresistor (e.g., the photoresistor 152 of FIG. 1).

Referring to FIG. 2, in the state 201 in which a screen based on the first brightness is displayed in the display 140, the electronic device 101 may obtain data from a touch sensor (e.g., the touch sensor 151 of FIG. 1). The data may indicate a contact between the display 140 and an external object 210. Referring to FIG. 2, in the state 201, an example of the external object 210 (e.g., a hand) contacted on the display 140 is illustrated. According to an embodiment, the electronic device 101 may identify a contact surface 220 between the display 140 and the external object 210, based on the data obtained from the touch sensor. For example, the electronic device 101 may identify a size and a position of the contact surface 220 and/or a pressure (e.g., a pressure of the external object 210 pressing the display 140) applied to the contact surface 220, based on the data obtained from the touch sensor. For example, the electronic device 101 may identify coordinates of points P1, P2, P3, P4, and P5 in the contact surface 220 and/or a pressure applied to each of the points P1, P2, P3, P4, and P5, based on the data obtained from the touch sensor. Each of the points P1, P2, P3, P4, and P5 may be referred to as a contact point. The electronic device 101 may obtain coordinates including numerical values indicating the positions of the contact points P1, P2, P3, P4, and P5 based on a coordinate system formed by two-dimensional axes (e.g., an X-axis, and/or a Y-axis) formed in a display area of the display 140 in a state of identifying the contact surface 220 of the external object 210 and the display 140. The coordinates may be matched with an identifier (e.g., an index) for distinguishing each of the contact points P1, P2, P3, P4, and P5.

According to an embodiment, the electronic device 101 may identify a gesture represented by the external object 210 contacted on the display 140 through the contact points P1, P2, P3, P4, and P5, based on a distribution of the contact points P1, P2, P3, P4, and P5. The number of the contact points P1, P2, P3, P4, and P5 may be associated with extent of the contact surface 220 formed on the display 140 by a contact of the external object 210. A shape of the contact points P1, P2, P3, P4, and P5 in the display 140 may be associated with the contact surface 220, and/or a shape of the external object 210 contacted on the display 140. According to an embodiment, an operation in which the electronic device 101 identifies the gesture based on the distribution of the contact points P1, P2, P3, P4, and P5 on the display 140 will be described with reference to FIG. 3A to FIG. 3C.

According to an embodiment, the gesture identified by the electronic device 101 based on the distribution of the contact points P1, P2, P3, P4, and P5 may include a preset gesture for partially changing a brightness of a screen displayed in the display 140. For example, in case that visibility of the screen displayed through the display 140 is reduced by external light, a user watching the display 140 may perform a gesture to compensate for the reduction in the visibility caused by the external light, such as a gesture (e.g., a gesture illustrated in FIG. 2) that contacts an edge of a hand on the display 140. For example, the user watching the display 140 may perform a gesture of partially covering the display 140 to block another user watching the display 140. According to an embodiment, the electronic device 101 may identify the exemplified gestures based on the distribution of the contact points P1, P2, P3, P4, and P5. Based on identifying at least one of the gestures, the electronic device 101 may at least partially change the brightness of the screen displayed in the display 140.

Based on identifying the external object 210 contacted on the display 140 along the contact surface 220 in the state 201, the electronic device 101 may partially adjust the brightness of the screen displayed in the display 140 based on the gesture performed by the external object 210. The state 202 of FIG. 2 may be an exemplary state after partially adjusting the brightness of the screen based on the gesture. In the state 202, the electronic device 101 may change a brightness of at least one visual object having a preset type, among visual objects included in the screen, to a second brightness different from the first brightness. For example, the electronic device 101 may change a brightness of a portion in which multimedia content, such as a video 230, is displayed in the screen to the second brightness exceeding the first brightness. An operation of changing the brightness of the portion in which the video 230 is displayed to the second brightness exceeding the first brightness may include an operation of changing a representative value of a brightness of pixels corresponding to the portion in which the video 230 is displayed to the second brightness among pixels of the display 140. The operation of changing the brightness of the portion in which the video 230 is displayed to the second brightness exceeding the first brightness may include an operation of displaying a visual object (e.g., a quadrangle including an opening corresponding to the portion) that is superimposed on another portion different from the portion and has preset opacity (or transparency).

Referring to FIG. 2, in the state 202 in which a gesture for at least partially adjusting a brightness of the display 140 is identified, the electronic device 101 may select at least one visual object to be emphasized based on the gesture among visual objects included in the screen of the display 140. The electronic device 101 selects the at least one visual object may be performed based on whether a type of a visual object is included in a preset type. The type of the visual object may be identified by an application executed by the electronic device 101 and/or a system application executed by the electronic device 101 to display the screen. The preset type may include at least one of a quick response (QR) code, a barcode, an image, the video 230, or a software keyboard.

As described above, the electronic device 101 according to an embodiment may identify a gesture including an intention of the user to change the brightness and/or visibility of the display 140 based on the contact surface 220 formed on the display 140. Based on the gesture, the electronic device 101 may at least partially change the brightness of the screen displayed in the display 140. For example, the electronic device 101 may increase a brightness of a preset type of a visual object (e.g., the video 230) that is likely to be watched by the user among visual objects included in the screen to a brightness that exceeds a brightness of another visual object.

Hereinafter, referring to FIG. 3A to FIG. 3C, an example of an operation in which the electronic device 101 identifies a gesture performed by the external object 210 in contact with the contact surface 220 by using the touch sensor will be described.

FIG. 3A to FIG. 3C illustrate an example of an operation in which an electronic device 101 identifies a touch input on a display 140 based on data of a touch sensor (e.g., the touch sensor 151 of FIG. 1), according to an embodiment. The electronic device 101 of FIG. 3A to FIG. 3B may be an example of the electronic device 101 of FIG. 1 to FIG. 2. For example, the electronic device 101 and the display 140 of FIG. 1 may include the electronic device 101 and the display 140 of FIG. 3A to FIG. 3C.

Referring to FIGS. 3A to 3C, exemplary states 301, 302, and 303 in which the electronic device 101 identifies an external object (e.g., the external object 210 of FIG. 2) contacted on the display 140 based on the data of the touch sensor (e.g., the touch sensor 151 of FIG. 1) according to an embodiment are illustrated. Each of the states 301, 302, and 303 may be a state in which different gestures for adjusting visibility of a screen displayed through the display 140 are performed by at least partially adjusting a brightness of the display 140.

According to an embodiment, the electronic device 101 may obtain information associated with a contact surface 310 between the display 140 and the external object based on the data of the touch sensor. The information may include one or more parameters indicating a position and/or a size of the contact surface 310 in the display 140. The information may include coordinates of one or more points indicating the contact surface 310. A coordinate of a point included in the contact surface 310 may be a combination of numerical values indicating a position of the point based on two-dimensional axes formed in the display 140. Each of the two-dimensional axes may be, in a display 140 having a shape of a rectangle, parallel to edges perpendicular to each other in the rectangle. In an embodiment of FIG. 3A to FIG. 3C in which the electronic device 101 includes the display 140 in a shape of a rectangle having a height exceeding a width, it is assumed that an X-axis among the two-dimensional axes is an axis parallel to the width of the display 140, and the Y-axis among the two-dimensional axes is an axis parallel to the height of the display 140.

Referring to FIG. 3A, the exemplary state 301 in which the electronic device 101 identifies contact points P1, P2, P3, P4, and P5 in the contact surface 310 based on the data from the touch sensor is illustrated. For example, in case that a user contacts an edge of a hand substantially parallel to the X-axis of the display 140, the edge of the hand may be contacted on the display 140 along a direction of the X-axis, such as the contact surface 310 exemplified in FIG. 3A. According to an embodiment, the electronic device 101 may identify the exemplified gesture of the user based on the data of the touch sensor. In the example, the user may perform the gesture to improve visibility of the display 140. The electronic device 101 may identify whether the gesture has been performed to improve the visibility of the display 140 by using another sensor (e.g., the photoresistor 152 of FIG. 1) different from the touch sensor. Hereinafter, an example of an operation in which the electronic device 101 identifies the gesture performed to improve the visibility of the display 140 will be described with reference to FIG. 3A.

Referring to FIG. 3A, in response to identifying a touch input based on the contact points P1, P2, P3, P4, and P5 exceeding the preset number (e.g., three) based on the data of the touch sensor, the electronic device 101 may obtain coordinates of the contact points P1, P2, P3, P4, and P5 associated with the touch input based on the data. Based on a direction and/or a shape of the contact points identified based on the coordinates, the electronic device 101 may identify a shape of the contact surface 310 indicated by the contact points. The electronic device 101 may identify whether the contact surface 310 is associated with a preset gesture for partially adjusting the brightness of the display 140, by comparing the coordinates of the contact points P1, P2, P3, P4, and P5. For example, the electronic device 101 may identify whether the touch input associated with the contact points P1, P2, P3, P4, and P5 corresponds to the preset gesture, based on differences in the coordinates in axes (e.g., the X-axis, and/or the Y-axis) perpendicular to each other.

Referring to FIG. 3A, the electronic device 101 may identify a difference 314 on the X-axis and a difference 312 on the Y-axis of the contact points P1, P2, P3, P4, and P5 of the identified touch input based on the data of the touch sensor. The difference 314 on the X-axis may indicate a maximum value among differences in X-axis coordinate values of the contact points P1, P2, P3, P4, and P5, and the difference 312 on the Y-axis may indicate a maximum value among differences in Y-axis coordinate values of the contact points P1, P2, P3, P4, and P5. Referring to FIG. 3A, in the state 301 in which the difference 314 on the X-axis is greater than the difference 312 on the Y-axis among the differences 314 and 312 of the contact points P1, P2, P3, P4, and P5 with respect to the X-axis and the Y-axis, respectively, the electronic device 101 may determine that the contact points P1, P2, P3, P4, and P5 correspond to a first preset gesture for partially increasing the brightness of the display 140. The first preset gesture may include a gesture covering the display 140 along a direction corresponding to the X-axis among the X-axis and the Y-axis illustrated with reference to FIG. 2.

Based on identifying that the contact points P1, P2, P3, P4, and P5 are associated with the first preset gesture, the electronic device 101 may select at least one visual object having a brightness increased by the first preset gesture based on visual objects in the screen displayed through the display 140. By increasing the brightness of the at least one visual object to be greater than a brightness of other visual objects, the electronic device 101 may emphasize the at least one visual object in the display 140. An operation of the electronic device 101 in the state 301 in which the contact points P1, P2, P3, P4, and P5 corresponding to the first preset gesture are identified will be described with reference to FIG. 4A to FIG. 4B.

An operation of comparing the coordinates of the contact points P1, P2, P3, P4, and P5 by the electronic device 101 is not limited to the operation of comparing the differences 312 and 314. For example, the electronic device 101 may identify a figure connecting the contact points P1, P2, P3, P4, and P5 based on the differences 314 and 312 of each of the X-axis and the Y-axis of the contact points P1, P2, P3, P4, and P5. In case that the figure indicates a line extending at an angle less than a preset angle range (e.g., 45 °, or another angle less than 45 °) with respect to the X-axis in the display 140, the electronic device 101 may determine that the touch input associated with the contact points P1, P2, P3, P4, and P5 corresponds to the first preset gesture.

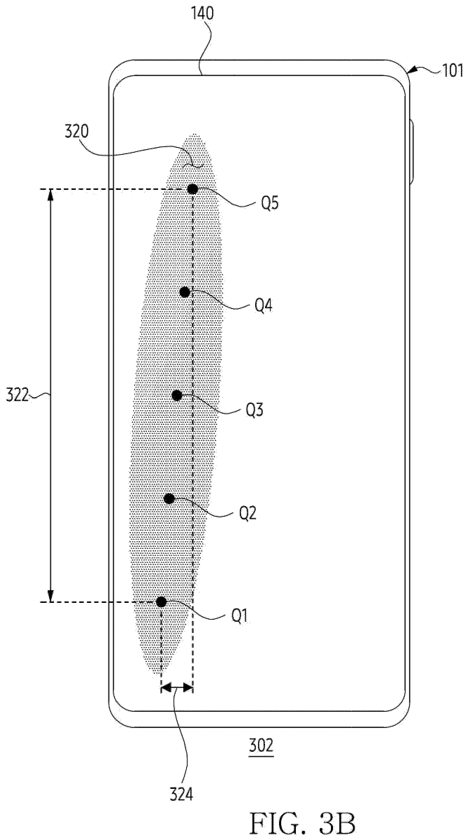

An arrangement of the contact points P1, P2, P3, P4, and P5 identified by the electronic device 101 from the data of the touch sensor is not limited to an example of FIG. 3A. Referring to FIG. 3B, the exemplary state 302 in which the electronic device 101 according to an embodiment identifies a contact surface 320 having a different shape from the contact surface 310 of FIG. 3A based on the data of the touch sensor is illustrated. For example, in case that the user contacts the edge of the hand substantially parallel to the Y-axis of the display 140, the edge of the hand may be contacted on the display 140 along the direction of the Y-axis, such as the contact surface 320 illustrated in FIG. 3B. In the example, the user may perform a gesture to enhance security of information displayed through the display 140. Hereinafter, an example of an operation in which the electronic device 101 identifies the gesture performed to enhance the security of the information will be described with reference to FIG. 3B.

Referring to FIG. 3B, based on identifying a touch input based on contact points Q1, Q2, Q3, Q4, and Q5 exceeding the preset number (e.g., three) based on the data of the touch sensor, the electronic device 101 may identify whether the touch input corresponds to the preset gesture for adjusting a brightness of at least a portion of the display 140. The electronic device 101 may identify a shape and/or a position of the contact surface 320 including the contact points Q1, Q2, Q3, Q4, and Q5, based on coordinates of the contact points Q1, Q2, Q3, Q4, and Q5. According to an embodiment, the electronic device 101 may identify whether the contact surface 320 corresponds to a second preset gesture for partially reducing the brightness of the display 140, by comparing the coordinates of the contact points Q1, Q2, Q3, Q4, and Q5. For example, the electronic device 101 may identify whether the touch input associated with the contact points Q1, Q2, Q3, Q4, and Q5 corresponds to the second preset gesture, based on differences in the coordinates in axes (e.g., the X axis, and/or the Y axis) perpendicular to each other.

Referring to FIG. 3B, the electronic device 101 may identify a difference 324 on the X-axis and a difference 322 on the Y-axis of the contact points Q1, Q2, Q3, Q4, and Q5. As described above with reference to FIG. 3A, the difference 324 on the X-axis may indicate a maximum value among differences in X-axis coordinate values of the contact points Q1, Q2, Q3, Q4, and Q5, and the difference 322 on the Y-axis may indicate a maximum value among differences in Y-axis coordinate values of the contact points Q1, Q2, Q3, Q4, and Q5. Referring to FIG. 3B, in the state 302 in which the difference 322 on the Y-axis is greater than the difference 324 on the X-axis among the differences 324 and 322, the electronic device 101 may determine that the contact points Q1, Q2, Q3, Q4, and Q5 correspond to the second preset gesture for reducing the brightness of at least a portion of the display 140. The second preset gesture may include a gesture covering the display 140 along a direction corresponding to the Y-axis among the X-axis and the Y-axis.

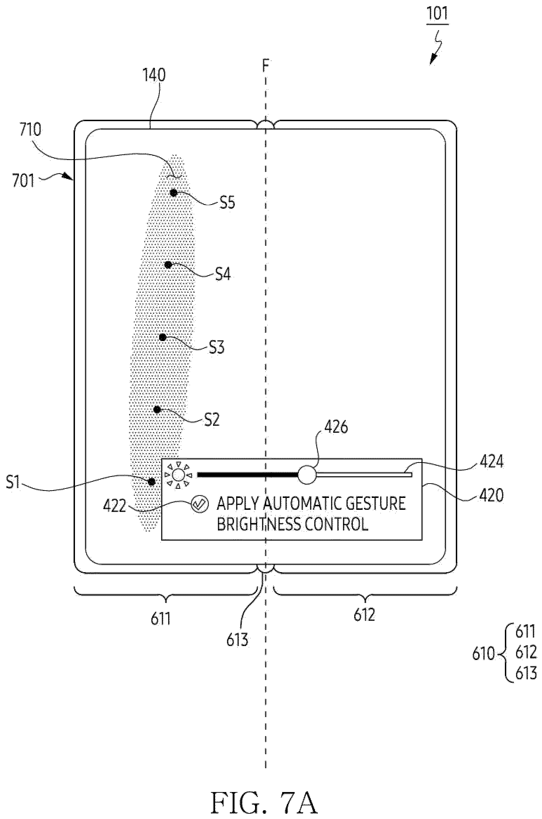

In the state 302 in which the second preset gesture is identified based on the contact points Q1, Q2, Q3, Q4, and Q5, the electronic device 101 may identify at least a portion to be dimmed by the second preset gesture in the screen displayed through the display 140. The portion may include a portion of displaying a preset type of a visual object for receiving a password and/or a lock pattern, among visual objects included in the screen. The portion may include a portion in which a window selected or focused by the user is displayed among windows corresponding to each of different applications executed by the electronic device 101 based on multitasking. An operation of the electronic device 101 in the state 302 in which the contact points Q1, Q2, Q3, Q4, and Q5 corresponding to the second preset gesture are identified will be described with reference to FIG. 7A to FIG. 7C.

An operation of comparing the coordinates of the contact points Q1, Q2, Q3, Q4, and Q5 by the electronic device 101 is not limited to the operation of comparing the differences 322 and 324. For example, the electronic device 101 may identify an angle in the display 140 of a figure connecting the contact points Q1, Q2, Q3, Q4, and Q5. In case that the figure corresponds to a line extending to an angle exceeding a preset angle range (e.g., 45 °, or another angle greater than or equal to 45 °) in the display 140 with respect to the X-axis, the electronic device 101 may determine that the touch input associated with the contact points Q1, Q2, Q3, Q4, and Q5 corresponds to the second preset gesture. Referring to FIGS.

3A to 3B, the electronic device 101 may identify the second preset gesture identified based on the contact points Q1, Q2, Q3, Q4, and Q5 arranged along a different direction perpendicular to a preset direction (e.g., a direction of the X axis) associated with the first preset gesture.

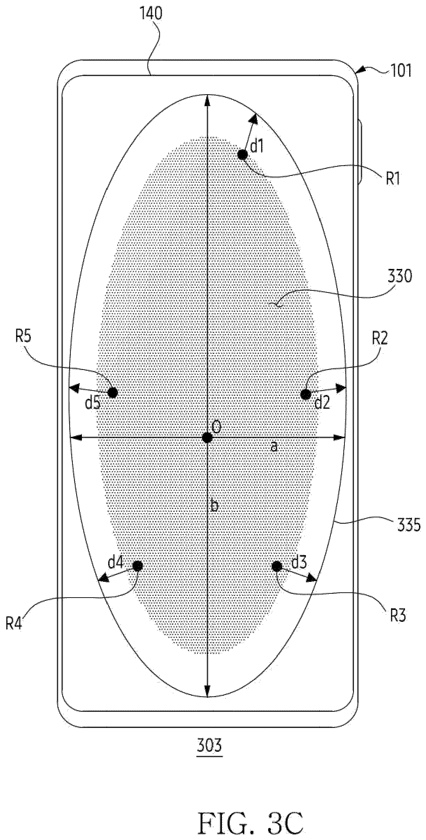

A gesture performed by the user to adjust the brightness of at least a portion of the screen displayed through the display 140 is not limited to the first preset gesture and the second preset gesture contacting the edge of the hand on the display 140. Referring to FIG. 3C, the exemplary state 303 in which the electronic device 101 receives data from the touch sensor based on a contact surface 330 different from the states 301 and 302 of FIG. 3A to FIG. 3B is illustrated. For example, in case that the user contacts a palm on the display 140, a shape of the palm contacted on the display 140 may have a shape similar to an ellipse, such as the exemplary contact surface 330 of FIG. 3C. In the example, the user may perform the gesture to reduce the brightness of at least a portion of the display 140. Hereinafter, an example of an operation of identifying the gesture performed by the electronic device 101 to reduce the brightness of at least a portion of the display 140 will be described with reference to FIG. 3C.

Referring to FIG. 3C, the electronic device 101 may identify a touch input based on contact points R1, R2, R3, R4, and R5 exceeding the preset number (e.g., three) based on the data of the touch sensor. In the state 303 in which the touch input is identified, the electronic device 101 may identify whether the touch input corresponds to a preset gesture for reducing the brightness of at least a portion of the display 140. The electronic device 101 may identify a shape and/or a position of the contact surface 330 based on coordinates of the contact points R1, R2, R3, R4, and R5. According to an embodiment, the electronic device 101 may identify whether the contact surface 330 corresponds to a third preset gesture for partially reducing the brightness of the display 140, such as a gesture covering the display 140 with the palm by comparing the coordinates of the contact points R1, R2, R3, R4, and R5. For example, based on whether the contact points R1, R2, R3, R4, and R5 are arranged along a closed curve such as an ellipse, it may be identified whether the touch input indicated by the contact points R1, R2, R3, R4, and R5 corresponds to the third preset gesture.

Referring to FIG. 3C, the electronic device 101 may identify whether the contact surface 330 corresponds to the third preset gesture, by comparing a shape of a preset ellipse 335 formed in the display 140 and the contact surface 330. In the state 303 in which the contact points R1, R2, R3, R4, and R5 included in the contact surface 330 are identified, the electronic device 101 may identify distances between the preset ellipse 335 and the contact points R1, R2, R3, R4, and R5 based on Equation 1.

【Equation 1】

$$d = b^2 x^2 + a^2 y^2 - a^2 b^2$$

Referring to FIG. 3C and the Equation 1, the a may indicate a length of a short axis of the preset ellipse 335, and the b may indicate a length of a long axis of the preset ellipse 335. In an embodiment of FIG. 3C in which the preset ellipse 335 has a point O in the display 140 as a center, each of the x and the y of the Equation 1 may be an X-axis coordinate value and a Y-axis coordinate value of a contact point based on a two-dimensional coordinate system in the display 140 having the point O as an origin point. Referring to the Equation 1, based on the coordinates x and y of the contact point, the electronic device 101 may identify the shortest distance d between a boundary line of the preset ellipse 335 and the contact points. A sign of the d may indicate whether the contact point is included inside the preset ellipse 335. For example, in case that the d is negative, the electronic device 101 may determine that the contact point is included inside the preset ellipse 335. For example, in case that the d is 0, the electronic device 101 may determine that the contact point is disposed on the boundary line of the preset ellipse 335. For example, in case that the d is positive, the electronic device 101 may determine that the contact point is disposed outside the preset ellipse 335.

According to an embodiment, the electronic device 101 may identify distances d1, d2, d3, d4, and d5 between the preset ellipse 335 and the contact points R1, R3, R4, and R5 using the Equation 1 in a state in which the coordinates of the contact points R1, R2, R3, R4, and R5 are identified based on the data of the touch sensor. As described above with reference to the Equation 1, the electronic device 101 may identify the distance d1 having a negative sign from a coordinate of the contact point R1 included in the preset ellipse 335. Similarly, the electronic device 101 may identify the distances d2, d3, d4, and d5 having a negative sign, from the other contact points R2, R3, R4, and R5.

According to an embodiment, the electronic device 101 may identify whether the contact points R1, R2, R3, R4, and R5 correspond to a preset gesture, based on the distances d1, d2, d3, d4, and d5 between a preset closed curve such as the preset ellipse 335 and the contact points R1, R2, R3, R4, and R5. For example, in case of identifying that all of the distances d1, d2, d3, d4, and d5 have the negative sign and are separated by less than a preset distance from the boundary line of the preset ellipse 335, the electronic device 101 may determine that the contact points R1, R2, R3, R4, and R5 correspond to the preset gesture (e.g., the third preset gesture).

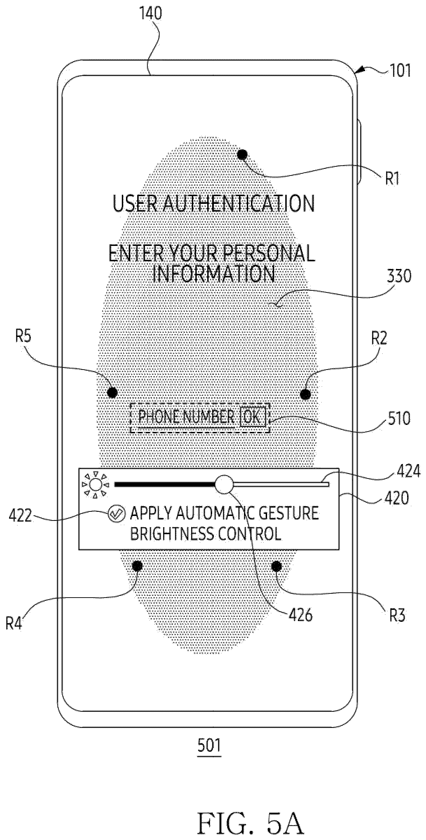

In the state 303 in which the third preset gesture is identified based on the contact points R1, R2, R3, R4, and R5, the electronic device 101 may reduce the brightness of at least a portion of the screen displayed through the display 140. The at least a portion may include a portion in which multimedia content focused by the user is displayed, such as a preset type of a visual object for receiving a password and/or a lock pattern, and/or the video 230 of FIG. 2. The at least a portion may include a portion in which a window selected or focused by the user is displayed, among windows corresponding to different applications executed by the electronic device 101 based on multitasking. In the state 303, an operation in which the electronic device 101 reduces the brightness of the at least a portion of the screen will be described with reference to FIG. 5A to FIG. 5B.

As described above, based on the number and/or coordinates of contact points of a touch input performed on the display 140, the electronic device 101 according to an embodiment may identify whether the touch input corresponds to a preset gesture (e.g., the first preset gesture to the third preset gesture) for adjusting the brightness of at least a portion of the screen displayed through the display 140. In a state (e.g., the states 301, 302, and 303 of FIG. 3A to FIG. 3C) of identifying the touch input corresponding to the preset gesture, the electronic device 101 may increase, or decrease the brightness of at least a portion of the screen displayed through the display 140. Based on the increase or the decrease of the brightness of the at least a portion, the electronic device 101 may perform an operation of partially adjusting the brightness of the display 140 based on a gesture of the user.

Hereinafter, an example of an operation of adjusting the brightness of at least a portion of the display 140 in a state in which the electronic device 101 identifies the first preset gesture, as in the state 301 of FIG. 3A, according to an embodiment, will be described with reference to FIG. 4A to FIG. 4B.

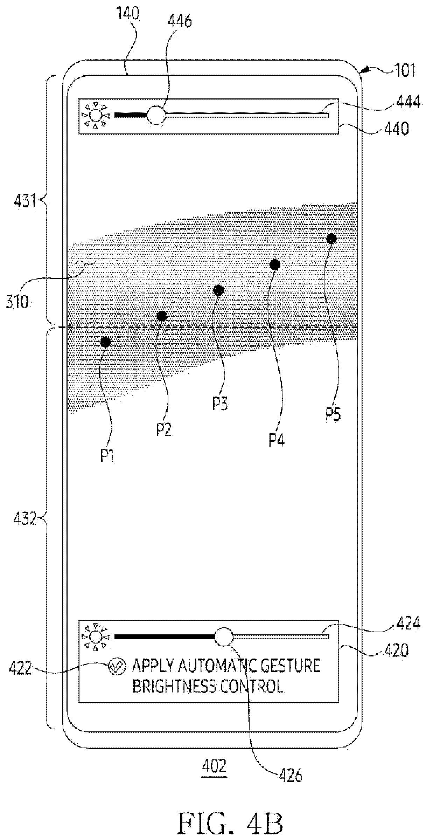

FIG. 4A to FIG. 4B illustrate an example of an operation in which an electronic device 101 increases a brightness of at least a portion of a display 140 based on a touch input on the display 140, according to an embodiment. The electronic device 101 of FIG. 4A and FIG. 4B may be an example of the electronic device 101 of FIG. 1 to FIG. 2. For example, the electronic device 101 and the display 140 of FIG. 1 may include the electronic device 101 and the display 140 of FIG. 4A to FIG. 4B.

Referring to FIG. 4A to FIG. 4B, exemplary states 401 and 402 in which the electronic device 101 changes a brightness of at least a portion of the display 140 based on an external object (e.g., the external object 210 of FIG. 2) contacted on the display 140 along a contact surface 310 are illustrated. The contact surface 310 of FIG. 4A to FIG. 4B may correspond to the contact surface 310 described above with reference to the state 301 of FIG. 3A. For example, the electronic device 101 may identify an external object (e.g., an edge of a hand of a user) in contact with the display 140 along a preset direction (e.g., a direction corresponding to an X-axis) of the display 140, based on coordinates of contact points P1, P2, P3, P4, and P5 included in the contact surface 310, based on the above-described operation with reference to FIG. 3A.

Referring to FIG. 4A, in the state 401 in which a touch input corresponding to a preset gesture (e.g., the first preset gesture of FIG. 3A) is identified based on the contact points P1, P2, P3, P4, and P5, the electronic device 101 may determine whether to change the brightness of at least a portion of the display 140, based on data identified through duration of the touch input, an photoresistor (e.g., the photoresistor 152 of FIG. 1), an accelerometer (e.g., the accelerometer 154 of FIG. 1), and/or communication circuitry (e.g., the communication circuitry 160 of FIG. 1).

For example, based on identifying that the touch input is maintained for duration exceeding 4 seconds to 5 seconds, the electronic device 101 may change the brightness of at least a portion of the display 140. For example, based on identifying a brightness of external light of the electronic device 101 that exceeds a preset brightness, based on data of the photoresistor, the electronic device 101 may change the brightness of at least a portion of the display 140. For example, based on information (e.g., an amount of sunlight, and/or weather) associated with an environment of a position where the electronic device 101 is included, based on the communication circuitry and/or a GPS sensor (e.g., the GPS sensor 153 of FIG. 1), the electronic device 101 may change the brightness of at least a portion of the display 140. For example, based on a position of the electronic device 101 identified by data of the GPS sensor, the electronic device 101 may obtain information including weather in the position from an external electronic device (e.g., a server) through the communication circuitry. Based on identifying a preset type of weather (e.g., sunny weather) from the information, the electronic device 101 may change the brightness of at least a portion of the display 140. For example, based on a direction of the electronic device 101 identified by data of the accelerometer, the electronic device 101 may change the brightness of at least a portion of the display 140. For example, based on identifying a preset direction (e.g., a direction that causes the display 140 to face perpendicular to a direction of gravitational acceleration) based on the accelerometer, the electronic device 101 may change the brightness of at least a portion of the display 140. In order to adjust the brightness of the display 140, a condition used together with the touch input based on the contact points P1, P2, P3, P4, and P5 illustrated in FIG. 4A is not limited to the exemplified conditions. For example, the electronic device 101 may change the brightness of at least a portion of the display 140 based on whether at least two of the exemplified conditions are satisfied.

Referring to FIG. 4A, the electronic device 101 may increase a brightness of a portion of a screen displayed through the display 140 to a brightness exceeding a brightness of another portion in the state 401 in which one or more conditions for changing the brightness of at least a portion of the display 140 are satisfied. For example, based on identifying that the touch input corresponds to a preset gesture for adjusting a first brightness of the display 140 based on the coordinates of the contact points P1, P2, P3, P4, and P5, the electronic device 101 may change a brightness of a first portion in which at least one first visual object having a preset type is displayed among a plurality of visual objects included in the screen to a second brightness different from the first brightness. The second brightness may exceed the first brightness. The electronic device 101 may increase the brightness of the at least one first visual object classified into the preset type among the plurality of visual objects displayed through the display 140 to a brightness exceeding a brightness of second visual objects different from the at least one first visual object among the plurality of visual objects.

Referring to FIG. 4A, the state 401 in which the electronic device 101 increases a brightness of a portion 410 including a QR code to a brightness exceeding a brightness of another portion in the screen displayed through the display 140 is illustrated. The electronic device 101 may identify a visual object of a preset type, including a QR code included in the portion 410. The preset type may be set to classify a visual object that the user sees first, such as the QR code, an image, and a video (e.g., the video 230 of FIG. 2). According to an embodiment, based on one or more instructions included in an application executed by the electronic device 101, the electronic device 101 may identify the visual object of the preset type in a screen corresponding to the application. According to an embodiment, based on a system application for generating a screen to be displayed in the display 140, the electronic device 101 may identify the visual object of the preset type in the screen. The electronic device 101 may increase a brightness of a portion (e.g., the portion 410 including the QR code) in which the visual object is displayed to a brightness exceeding a brightness of another portion in the state 401.

In the state 401 of FIG. 4A, the electronic device 101 may increase a brightness of pixels included in the portion 410 among pixels of the display 140, in order to increase the brightness of the portion 410. While increasing the brightness of the pixels included in the portion 410, the electronic device 101 may reduce a brightness of pixels included in another portion different from the portion 410. The electronic device 101 may increase the brightness of the portion 410 to a maximum brightness within an adjustable brightness range. For example, in the state 401 in which a preset gesture indicated by the contact points P1, P2, P3, P4, and P5 is identified, the electronic device 101 may increase the brightness of the portion 410 where the QR code is displayed to the maximum brightness. In case of identifying the preset gesture while displaying a screen based on the maximum brightness, the electronic device 101 may refrain from performing an operation associated with the preset gesture. In the state 401 in which the brightness of the portion 410 is increased to the maximum brightness, the electronic device 101 may maintain the brightness of the other portion different from the portion 410 as a brightness of another state before identifying the preset gesture, or may reduce a brightness to less than the brightness of the other state.

Referring to FIG. 4A, in the state 401, the electronic device 101 may display a visual object 420 having a shape of a pop-up window for adjusting the brightness of the portion 410. In the visual object 420, the electronic device 101 may display a visual object 424 having a shape of a slider for receiving an input indicating adjusting the brightness of the portion 410. Based on a position of a visual object 426 superimposed on the visual object 424, the electronic device 101 may visualize the brightness of the portion 410. Based on the visual object 426 having a shape of a handle adjusted in the visual object 424, the electronic device 101 may identify the input indicating adjusting the brightness of the portion 410. Based on a gesture of dragging the visual object 426, the electronic device 101 may identify the input indicating adjusting the brightness of the portion 410. The electronic device 101 may display, in the visual object 420, the visual object 422 having a shape of a check box for checking whether to adjust the brightness of at least a portion of the display 140 based on the preset gesture exemplified with reference to FIG. 4A. Based on the visual object 422, the electronic device 101 may identify an input that toggles whether to respond to the preset gesture. The electronic device 101 may display the visual object 420 for preset duration after receiving the preset gesture.

An operation performed by the electronic device 101 in response to the preset gesture identified by the contact points P1, P2, P3, P4, and P5 is not limited to the operation described above with reference to FIG. 4A. Referring to FIG. 4B, the exemplary state 402 for selectively changing brightnesses of portions 431 and 432 of the display 140 distinguished by the preset gesture in response to the preset gesture identified by the contact points P1, P2, P3, P4, and P5 is illustrated. In the state 402, the electronic device 101 may distinguish the display 140 into the portions 431 and 432 based on a position in the display 140 of the contact surface 310 and/or the contact points P1, P2, P3, P4, and P5. For example, a boundary line between the portions 431, and 432 may extend along a direction (e.g., an X-axis direction) in which the contact surface 310 extends in the contact surface 310.

According to an embodiment, the electronic device 101 may increase a brightness of the second portion 432 distinguished by the contact surface 310 to a brightness exceeding a brightness of the first portion 431, in the state 402 of FIG. 4B. The electronic device 101 may display visual objects 440 and 420 having a shape of pop-up windows for individually controlling the brightness of each of the portions 431 and 432, in the state 402. For example, the visual object 420 may be displayed by the electronic device 101 to adjust an increased brightness of a portion (e.g., the second portion 432) of the display 140 having the increased brightness by the preset gesture, similar to the visual object 420 of FIG. 4A. For example, the visual object 440 may be displayed in the first portion 431 of the display 140 by the electronic device 101 to adjust the brightness of the first portion 431 different from the second portion 432 adjusted by the visual object 420.

Referring to FIG. 4B, the visual object 440 may display a visual object 444 having a shape of a slider, similar to the visual object 420, and a visual object 446 having a shape of a handle superimposed on the visual object 444. In the state 402 in which the brightness of the second portion 432 exceeds the brightness of the first portion 431, a position of the visual object 426 in the visual object 424 may be different from another position of the visual object 446 in the visual object 444. Based on a gesture of dragging the visual object 426, the electronic device 101 may adjust the brightness of the first portion 431 based on a position of the visual object 426 dragged by the gesture in the visual object 444. Similarly, based on the gesture of dragging the visual object 426, the electronic device 101 may adjust the brightness of the second portion 432 based on the position of the visual object 426 in the visual object 424.

As described above, according to an embodiment, the electronic device 101 may increase the brightness of the portion 410 of the display 140 to a brightness exceeding a brightness of another portion based on the preset gesture identified based on the contact surface 310 and/or the contact points P1, P2, P3, P4, and P5. Since the brightness of the portion 410 of the display 140 is increased, the electronic device 101 may emphasize a visual object (e.g., the visual object of the preset type) included in the portion 410. Based on the emphasis of the visual object, the electronic device 101 may enhance visibility of the visual object. Based on the enhanced visibility, the electronic device 101 may improve user experience associated with the visual object.

Hereinafter, an example of an operation of adjusting the brightness of at least a portion of the display 140 in a state in which the electronic device 101 identifies the third preset gesture, as in the state 303 of FIG. 3C, will be described with reference to FIG. 5A to FIG. 5B.

FIG. 5A to FIG. 5B illustrate an example of an operation in which an electronic device 101 reduces a brightness of at least a portion of a display 140 based on a touch input on the display 140, according to an embodiment. The electronic device 101 of FIG. 5A to FIG. 5B may be an example of the electronic device 101 of FIG. 1 to FIG. 2. For example, the electronic device 101 and the display 140 of FIG. 1 may include the electronic device 101 and the display 140 of FIG. 5A to FIG. 5B.

Referring to FIG. 5A to FIG. 5B, exemplary states 501 and 502 in which the electronic device 101 reduces the brightness of at least a portion of the display 140 based on an external object (e.g., the external object 210 of FIG. 2) contacted on the display 140 along a contact surface 330 are illustrated. The contact surface 330 of FIG. 5A to FIG. 5B may correspond to the contact surface 330 described above with reference to the state 303 of FIG. 3C. For example, the electronic device 101 may identify an external object (e.g., a palm of a user) covering the display 140 based on a preset closed curve having a shape of an ellipse, based on coordinates of contact points R1, R2, R3, R4, and R5 included in the contact surface 330, based on the operation described above with reference to the Equation 1 and/or FIG. 3C.

Referring to FIG. 5A to FIG. 5B, in the states 501 and 502 in which a touch input corresponding to a preset gesture (e.g., the third preset gesture of FIG. 3C) is identified based on the contact points R1, R2, R3, R4, and R5 arranged along the preset closed curve, the electronic device 101 may determine whether to change the brightness of at least a portion of the display 140 based on duration of the touch input, data of a photoresistor (e.g., the photoresistor 152 of FIG. 1), and/or a accelerometer (e.g., the accelerometer 154 of FIG. 1). For example, based on identifying that the touch input is maintained for preset duration (e.g., duration exceeding 4 seconds to 5 seconds), the electronic device 101 may change the brightness of at least a portion of the display 140. For example, based on identifying a posture of the electronic device 101 facing a preset direction (e.g., a direction that causes the display 140 to face perpendicular to a direction of gravitational acceleration) together with the touch input, the electronic device 101 may change the brightness of at least a portion of the display 140.

In the state 501 of FIG. 5A in which one or more conditions for changing the brightness of at least a portion of the display 140 are satisfied, the electronic device 101 may reduce a brightness of a portion 510 of a screen displayed through the display 140 to a brightness less than a brightness of another portion. For example, based on identifying that the touch input corresponds to the preset gesture to reduce the brightness of at least a portion of the display 140 based on distribution of the contact points R1, R2, R3, R4, and R5, the electronic device 101 may reduce a brightness of at least one visual object having a preset type including a text box for inputting a password and/or personal information (e.g., a phone number) among a plurality of visual objects included in the screen to less than the brightness of other visual objects except for the at least one visual object among the plurality of visual objects. Referring to FIG. 5A, the electronic device 101 may reduce the brightness of the portion 510 in which a text box for receiving the personal information such as the phone number is displayed to less than a brightness of another portion other except for the portion 510.

The electronic device 101 reducing the brightness of the portion 510 may include an operation of selectively reducing a brightness of pixels included in the portion 510 among pixels included in the display 140. The electronic device 101 reducing the brightness of the portion 510 may include an operation of displaying a figure having a preset transparency superimposed on the portion 510. The electronic device 101 may reduce the brightness of the portion 510 by a preset brightness from a brightness before receiving a preset gesture. While reducing the brightness of the portion 510, the electronic device 101 may maintain a brightness of another portion different from the portion 510 as the brightness before receiving the preset gesture. For example, as the preset gesture is repeatedly received, the electronic device 101 may gradually reduce the brightness of the portion 510. In the state 501 of reducing the brightness of the portion 510 in the display 140, the electronic device 101 may display a visual object 420 for adjusting the reduced brightness of the portion 510. An operation of the electronic device 101 associated with the visual object 420 may be performed similarly to the operation of the electronic device 101 with respect to the visual object 420 of FIG. 4A to FIG. 4B.

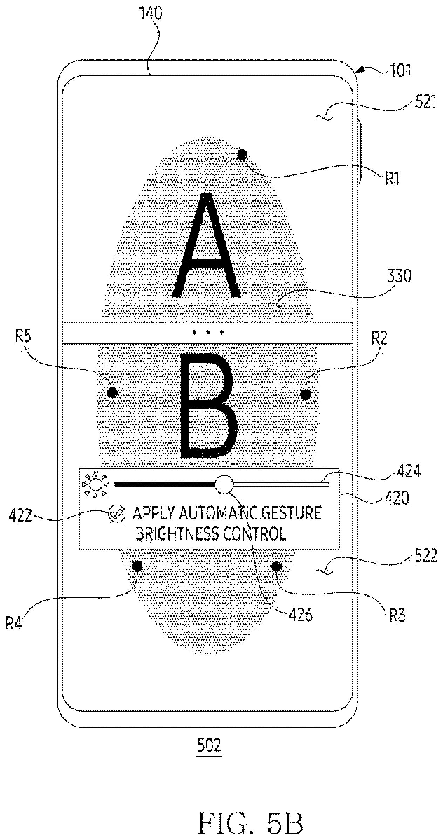

Referring to FIG. 5B, in the state 502 in which screens 521 and 522 corresponding to different applications executed by the electronic device 101 based on multitasking are displayed, the electronic device 101 may selectively reduce a brightness of any one of the screens 521 and 522 in response to the preset gesture identified by the contact points R1, R2, R3, R4, and R5. For example, the electronic device 101 may reduce a brightness of a specific screen selected or focused by a user among the screens 521 and 522 corresponding to the different applications to a brightness less than a brightness of another screen. In the exemplary state 502 in which the second screen 522 of the screens 521 and 522 is focused by the user, the electronic device 101 may reduce a brightness of the second screen 522 to less than a brightness of the first screen 521. The electronic device 101 may display the visual object 420 for adjusting the reduced brightness of the second screen 522. The electronic device 101 may display the visual object 420 superimposed on the second screen 522 having the reduced brightness.

As described above, according to an embodiment, the electronic device 101 may reduce the brightness of the portion 510 of the display 140 to less than a brightness of another portion based on a preset gesture covering the display 140 based on the contact surface 330 having a preset shape such as an ellipse. Since the brightness of the portion 510 of the display 140 is reduced, the electronic device 101 may reduce visibility of a visual object (e.g., a visual object in which privacy information such as a phone number, and/or a password is displayed) included in the portion 510. Based on the reduced visibility, the electronic device 101 may prevent leakage of information (e.g., the privacy information) included in the visual object.

In an embodiment, the electronic device 101 identifying the preset gesture may select a portion of the display 140 in which a brightness is to be adjusted based on a shape of the electronic device 101 and/or the display 140. Hereinafter, an example of a form factor of the electronic device 101 including the deformable display 140 (e.g., a flexible display) will be described with reference to FIG. 6.

FIG. 6 illustrates an example of different states 601, 602, and 603 of a housing 610 and/or a display 140 of an electronic device 101, according to an embodiment. The electronic device 101 of FIG. 6 may be an example of the electronic device 101 of FIG. 1. For example, the electronic device 101 and the display 140 of FIG. 1 may include the electronic device 101 and the display 140 of FIG. 6. Referring to FIG. 6, according to an embodiment, the electronic device 101 may include the housing 610 having a structure that may be folded by a folding axis F. The housing 610 may be referred to as a deformable housing and/or a foldable housing. The housing 610 may be distinguished into a hinge assembly 613 including the folding axis F, and a first housing 611 and a second housing 612 coupled to the hinge assembly 613. The hinge assembly 613 may be foldably coupled to the first housing 611 and the second housing 612 through each of different surfaces.

Referring to FIG. 6, an embodiment in which the folding axis F is formed in a direction parallel to a height of the display 140 in the display 140 in the electronic device 101 is illustrated. The display 140 may be disposed on all of a surface of the first housing 611 and a surface of the second housing 612 across the hinge assembly 613. A single plane may be formed by the surface of the first housing 611 and the surface of the second housing 612 on which the display 140 is disposed. The single plane may be referred to as a front surface of the electronic device 101 and/or the housing 610. Another surface of the electronic device 101 and/or the housing 610 opposite to the front surface may be referred to as a rear surface.

According to an embodiment, the electronic device 101 may include a sensor (e.g., the hall sensor 155 of FIG. 1) for identifying a shape of the housing 610 and/or of the display 140 foldable by the folding axis F. For example, as a hall sensor is included in the hinge assembly 613, the electronic device 101 may identify an angle of the display 140 bent by the folding axis F, by using the hall sensor. In the example, the hall sensor may output sensor data used to identify the angle associated with the folding axis F. For example, IMU sensors may be included in each of the first housing 611 and the second housing 612. In the example, the electronic device 101 may identify a first direction of gravitational acceleration applied to the first housing 611 based on data of a first IMU sensor in the first housing 611. In the example, the electronic device 101 may identify a second direction of gravitational acceleration applied to the second housing 612 based on data of a second IMU sensor in the second housing 612. Each of the first IMU sensor and the second IMU sensor may output sensor data indicating a direction of gravitational acceleration applied to a housing in which an IMU sensor is disposed based on preset axes (e.g., an x-axis, a y-axis, and/or a z-axis).

For example, the electronic device 101 may identify the first direction of a first portion of the display 140 disposed on the first housing 611 and the angle of the display 140 bent by the folding axis F, based on an IMU sensor included in the first housing 611 and the hall sensor included in the hinge assembly 613. In the example in which the electronic device 101 identifies the first direction and the angle using the sensor, the electronic device 101 may obtain the second direction of the second portion of the display 140 disposed on the second housing 612 based on the first direction and the angle.

In an embodiment, a state of the electronic device 101 may be distinguished by the shape of the housing 610 and/or the display 140 identified based on the sensor. Referring to FIG. 6, the different states 601, 602, and 603 of the electronic device 101 distinguished by an angle of the housing 610 and/or the display 140 bent by the folding axis F are illustrated. The angle may be identified based on data identified by the sensor of the electronic device 101. According to an embodiment, the electronic device 101 may identify a preset state corresponding to the state of the electronic device 101 among preset states based on a result of comparing the angle and preset angle ranges. The preset states may be referred to as preset shapes, and/or preset postures, or may be referred to as preset modes, in terms of the shape and/or a posture of the housing 610, and/or the display 140.

In an embodiment, the preset angle ranges compared to the angle of the housing 610 and/or the display 140 bent by the folding axis F may include a first preset angle range (e.g., a range including an angle of 131 ° or more and 180 ° or less) including a straight angle (e.g., 180°). The preset angle ranges may include a second preset angle range (e.g., a range including an angle between 70 ° and 130 °) that is different from the first preset angle range and includes a right angle (e.g., 90 °). The preset angle ranges may include a third preset angle range (e.g., a range including an angle between 0 ° and 70 °) that is different from the first preset angle range and the second preset angle range and includes 0 °.

A state of the electronic device 101 may be distinguished by a preset angle range including an angle and/or a state of the display 140. For example, a state (e.g., the state 601) in which the electronic device 101 identifies an angle included in the first preset angle range may be referred to as an unfolded state (or an unfolding state), an open state, and/or a straight angle state. For example, a state (e.g., the state 602) in which the electronic device 101 identifies an angle included in the second preset angle range may be referred to as a sub-folded state (or a sub-folding state), a sub-closed state, a sub-unfolded state, a sub-opened state and/or a flex state (or a flex mode). For example, a state (e.g., the state 603) in which the electronic device 101 identifies an angle included in the third preset angle range may be referred to as a folded state (or a folding state) and/or a closed state. Referring to FIG. 6, in the state 603 referred to as a fold state, the display 140 may be fully occluded by the housing 610 of the electronic device 101. In terms of being occluded in the folded state, the display 140 may be referred to as an inner display.

According to an embodiment, the electronic device 101 may display a screen suitable for the display 140 bent by the folding axis F in a flex state including the state 602 of FIG. 6. In the flex state, the electronic device 101 may selectively change a brightness of any one portion among portions of the display 140 distinguished by the folding axis F based on identifying a preset gesture (e.g., the first preset gesture to the third preset gesture described above with reference to FIG. 3A to FIG. 3C) for changing a brightness of at least a portion of the display 140.

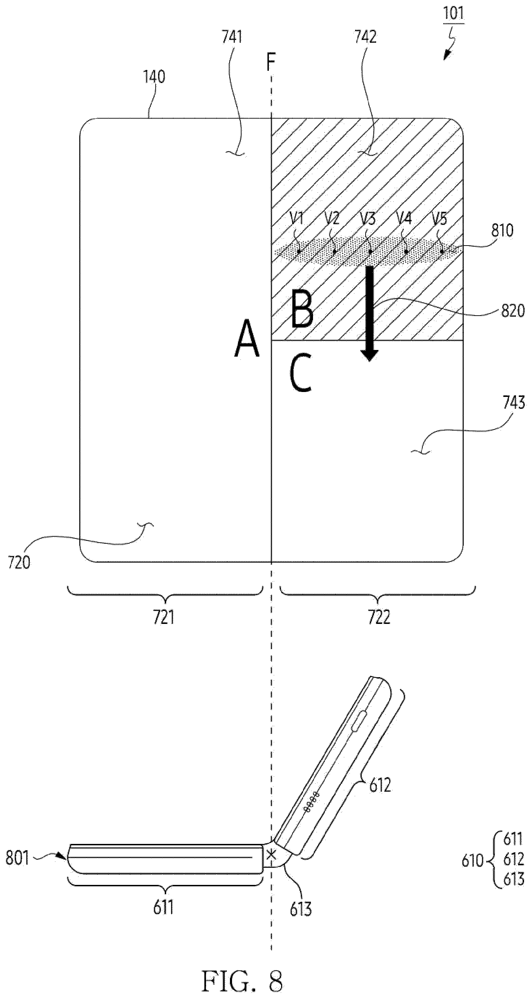

Hereinafter, an example of an operation in which the electronic device 101 according to an embodiment partially changes a brightness of the display 140 bent by the folding axis F will be described with reference to FIG. 7A to FIG. 7C and/or FIG. 8.

FIG. 7A to FIG. 7C illustrate an example of an operation in which an electronic device 101 changes a brightness of at least a portion of a display 140 based on a shape of the display 140 and/or a touch input on the display 140, according to an embodiment. The electronic device 101 of FIG. 7A to FIG. 7C may be an example of the electronic device 101 of FIG. 1 and/or FIG. 6. For example, the electronic device 101 and the display 140 of FIG. 1 may include the electronic device 101 and the display 140 of FIG. 7A to FIG. 7C. As described above with reference to FIG. 6, the electronic device 101 may include a first housing 611, a second housing 612, and a housing 610 deformable by a hinge assembly 613.

Referring to FIG. 7A, an exemplary state 701 in which the electronic device 101 reduces the brightness of at least a portion of the display 140 based on an external object (e.g., the external object 210 of FIG. 2) contacted on the display 140 along a contact surface 710 in an unfolded state including the state 601 of FIG. 6 is illustrated. The contact surface 710 of FIG. 7A may be associated with the contact surface 320 described above with reference to the state 302 of FIG. 3B. For example, the electronic device 101 may identify whether a touch input associated with contact points S1, S2, S3, S4, and S5 corresponds to a preset gesture (e.g., the second preset gesture in FIG. 3B), based on coordinates and/or the numbers of the contact points S1, S2, S3, S4, and S5. The electronic device 101 may identify that the touch input associated with the contact points S1, S2, S3, S4, and S5 corresponds to the preset gesture based on identifying that the contact points S1, S2, S3, S4, and S5 exceeding the preset number (e.g., three) are disposed along an angle equal to or less than a preset difference from a Y-axis parallel to a height among a width or the height of the display 140. For example, the electronic device 101 may identify an external object (e.g., an edge of a hand of a user) contacted on the display 140 along the Y-axis.

Referring to FIG. 7A, in the state 701 in which the contact surface 710 extending along the Y-axis and/or the contact points S1, S2, S3, S4, and S5 in the contact surface 710 are identified, the electronic device 101 may determine whether to change the brightness of at least a portion of the display 140 based on a preset gesture corresponding to the touch input based on duration of the touch input. For example, the electronic device 101 may change the brightness of at least a portion of the display 140 based on identifying that the touch input is maintained for duration exceeding 4 seconds to 5 seconds.

According to an embodiment, the electronic device 101 may identify at least a portion of the display 140 to adjust a brightness based on the preset gesture based on a shape of the foldable housing 610. In the state 701 in which the display 140 has a plane shape based on the unfolded state, the electronic device 101 may change a brightness of an entire display area of the display 140 based on the preset gesture. For example, the electronic device 101 may reduce the brightness of the entire display area to a brightness less than a brightness before receiving the preset gesture. Referring to FIG. 7A, the electronic device 101 in which the brightness of the display 140 is reduced in the state 701 may display a visual object 420 indicating the reduced brightness in the display 140. In response to the input associated with the visual object 420 described above with reference to FIG. 4A to FIG. 4B, the electronic device 101 may change the brightness of the entire display area of the display 140.

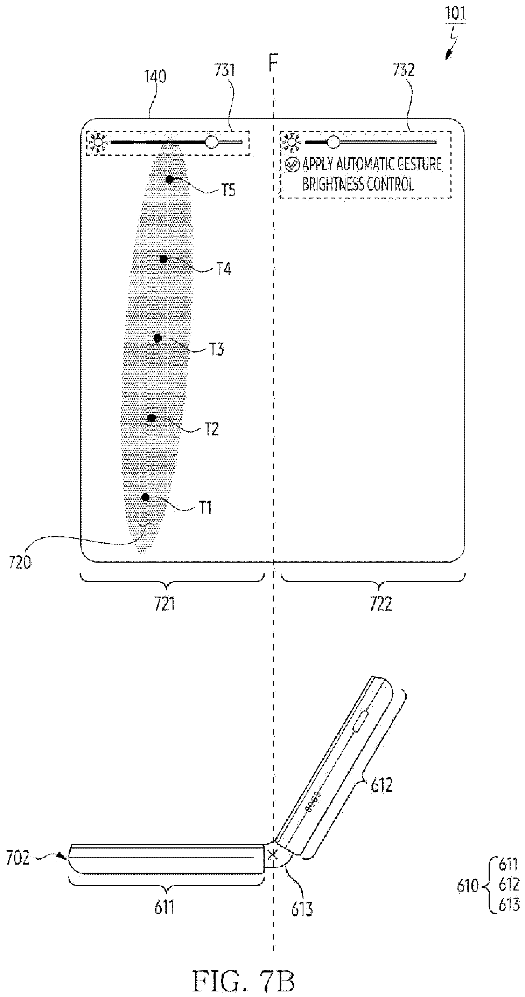

Referring to FIG. 7B, in the state 702 having a curved shape as a shape of the display 140 is bent by a folding axis F, the electronic device 101 may change a brightness of a portion of a display area of the display 140 based on the preset gesture. The electronic device 101 may identify an angle of the display 140 bent by the folding axis F based on a hall sensor (e.g., the hall sensor 155 of FIG. 1). For example, in the state 702 in which an angle included in an angle range (e.g., the second preset angle range of FIG. 6) corresponding to a flex state including the state 602 of FIG. 6 is identified, the electronic device 101 may identify a preset gesture for reducing the brightness of at least a portion of the display 140 based on contact points T1, T2, T3, T4, and T5. The electronic device 101 identifying the preset gesture may reduce a brightness of any one portion among different portions 721 and 722 of the display 140 distinguished by the folding axis F to less than a brightness of another portion.

For example, the electronic device 101 may reduce a brightness of the second portion 722 different from the first portion 721 in which the preset gesture corresponding to the contact points T1, T2, T3, T4, and T5 is performed, among the portions 721 and 722, to less than a brightness of the first portion 721. In the state 702 in which the brightness of the second portion 722 is reduced to less than the brightness of the first portion 721, the electronic device 101 may maintain the brightness of the first portion 721 at the brightness before receiving the preset gesture. A degree to which the electronic device 101 reduces the brightness of the second portion 722 may be associated with the brightness before receiving the preset gesture. For example, while the brightness of the second portion 722 is less than a preset brightness (e.g., 70% brightness), the electronic device 101 receiving the preset gesture may reduce the brightness of the second portion 722 by a first preset level (e.g., 10% brightness). For example, while the brightness of the second portion 722 exceeds the preset brightness, the electronic device 101 receiving the preset gesture may reduce the brightness of the second portion 722 by a second preset level (e.g., 20% brightness) that exceeds the first preset level. As the preset gesture is repeatedly performed, the brightness of the second portion 722 may be gradually reduced. Based on identifying that the brightness of the second portion 722 is reduced to a minimum brightness (e.g., 0% brightness), the electronic device 101 may display a screen based on the first portion 721 excluding the second portion 722. For example, in a time point when the brightness of the second portion 722 corresponds to the minimum brightness, the electronic device 101 may display a screen including a plurality of visual objects disposed based on a size of the first portion 721.

Referring to FIG. 7B, in the state 702 in which the brightness of the second portion 722 is changed to a brightness different from the brightness of the first portion 721 based on the contact points T1, T2, T3, T4, and T5, the electronic device 101 may display visual objects 731 and 732 for adjusting the brightness of each of the first portion 721 and second portion 722. Each of the visual objects 731 and 732 may have a layout of the visual object 420 described above with reference to FIG. 4A to FIG. 4B. Based on the visual object 731, the electronic device 101 may identify an input indicating a change of the brightness of the first portion. Based on the input, the electronic device 101 may change the brightness of the first portion 721 among the portions 721 and 722. Based on the visual object 732, the electronic device 101 may identify an input indicating a change of the brightness of the second portion 722. Based on the input, the electronic device 101 may change the brightness of the second portion 722 among the portions 721 and 722.

According to an embodiment, the electronic device 101 may execute applications that generate screens occupying different portions of the display 140 substantially simultaneously. The electronic device 101 may display the screens (e.g., a window and/or activity) corresponding to the applications based on a grid and/or a positional relationship of a pop-up in the display 140. While displaying the screens, the electronic device 101 identifying a preset gesture indicating a change of the brightness of at least a portion of the display 140 may selectively change a brightness of any one screen among the screens.

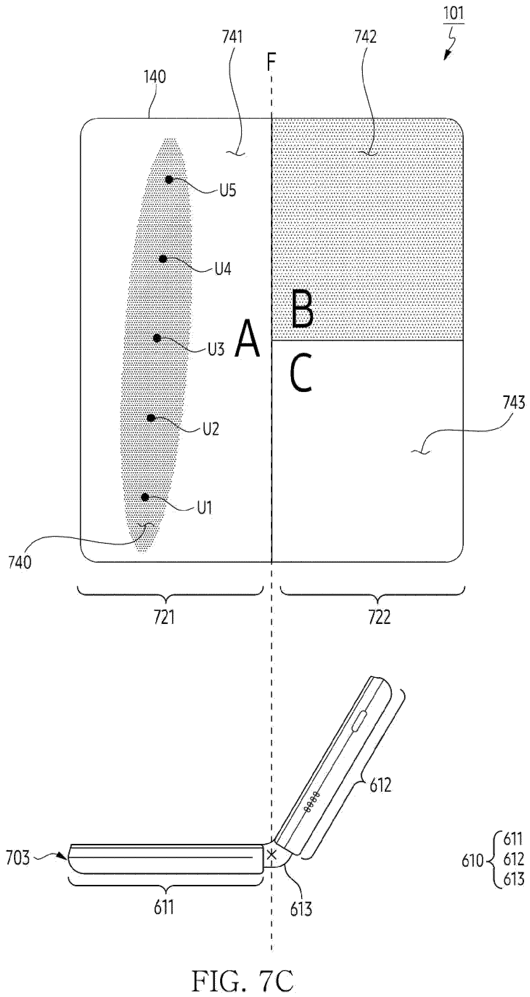

Referring to FIG. 7C, an exemplary state 703 in which the electronic device 101 identifies an external object contacted on the display 140 along a contact surface 740 based on contact points U1, U2, U3, U4, and U5 while the electronic device 101 displays screens 741, 742, and 743 corresponding to different applications is illustrated. In the state 703, based on the contact points U1, U2, U3, U4, and U5, the electronic device 101 may identify a preset gesture for reducing the brightness of at least a portion of the display 140. In response to the preset gesture, the electronic device 101 may reduce a brightness of a specific screen (e.g., the second screen 742) selected or focused by a user among the screens 741, 742, and 743 to less than a brightness of other screens (e.g., the first screen 741, and/or the third screen 743). Since the electronic device 101 selectively reduces the brightness of the specific screen, the electronic device 101 may block another user different from the user from watching the specific screen.

Although the state 703 in which a shape of the electronic device 101 has a shape in a flex state is illustrated, an operation of the electronic device 101 based on the screens 741, 742, and 743 in an unfolded state may be performed similarly to the operation described above with reference to FIG. 7C.

As described above, according to an embodiment, the electronic device 101 may select at least a portion of the display 140 to be dimmed by a preset gesture based on a shape of the display 140 bent by the folding axis F and/or screens corresponding to different applications. Hereinafter, an example of an operation in which the electronic device 101 restores the brightness of the at least a portion of the display 140 dimmed by the preset gesture will be described with reference to FIG. 8.

FIG. 8 illustrates an example of an operation in which an electronic device 101 changes a brightness of at least a portion of a display 140 based on a touch input on the display 140, according to an embodiment. The electronic device 101 of FIG. 8 may be an example of the electronic device 101 of FIG. 1 and/or FIG. 6. For example, the electronic device 101 and the display 140 of FIG. 1 may include the electronic device 101 and the display 140 of FIG. 8. As described above with reference to FIG. 6, the electronic device 101 may include a first housing 611, a second housing 612, and a housing 610 foldable by a hinge assembly 613.

Referring to FIG. 8, an exemplary state 801 after the electronic device 101 adjusts a brightness of at least one of screens 741, 742, and 743 corresponding to execution of different applications based on the gesture described above with reference to FIG. 3A to FIG. 3C. For example, in the state 703 of FIG. 7C, the electronic device 101 may selectively reduce a brightness of the second screen 742 focused by a user among the screens 741, 742, and 743, and then may be switched to a state 801. In case of repeatedly receiving a gesture for adjusting the brightness of at least a portion of the display 140, the electronic device 101 may gradually change the brightness of the at least a portion (e.g., the second screen 742) in response to the gesture. For example, the electronic device 101 may cumulatively change the brightness of at least a portion of the display 140 based on the gesture described above with reference to FIG. 3A to FIG. 3C.

According to an embodiment, the electronic device 101 may receive a preset gesture for restoring the brightness of at least a portion of the display 140 cumulatively changed. Referring to FIG. 8, the gesture for restoring the brightness of at least a portion of the display 140 may include a gesture in which an external object (e.g., the external object 210 of FIG. 2) contacted on the display 140 along a contact surface 810 is dragged along a direction 820 parallel to a height of the display 140. The electronic device 101 may identify the external object dragged along the direction 820 on the display 140 based on a motion of contact points V1, V2, V3, V4, and V5 included in the contact surface 810 using a touch sensor (e.g., the touch sensor 151 of FIG. 1).

The electronic device 101 may standardize a brightness of an entire display area of the display 140 to a single brightness, based on identifying that the contact points V1, V2, V3, V4, and V5 exceeding the preset number (e.g., three) are dragged along the direction 820 on the display 140. Referring to FIG. 8, in a state 801 in which a brightness of a portion (e.g., a portion in which the second screen 742 is displayed) of the display 140 is changed to another brightness from a brightness of another portion (e.g., the first screen 741, and/or the third screen 743), the electronic device 101 may change the brightness of the portion of the display 140 to the brightness of the other portion in response to the contact points V1, V2, V3, V4, and V5 dragged along the direction 820.

Based on the state 801 of FIG. 8 corresponding to the state 703 of FIG. 7C, the operation of restoring the brightness of at least a portion of the display 140 by the electronic device 101 is described, but the embodiment is not limited thereto. The electronic device 101 may change the brightness of at least a portion of the display 140 based on the gesture described above with reference to FIG. 8, in another state in which the brightness of at least a portion of the display 140 is changed, such as the states 401 and 402 of FIG. 4A to FIG. 4B, the states 501 and 502 of FIG. 5A to FIG. 5B, and/or the states 701 and 702 of FIG. 7A to FIG. 7B.

Hereinafter, an operation of the electronic device 101 according to an embodiment will be described with reference to FIG. 9 to FIG. 12.

FIG. 9 illustrates an example of a flowchart for describing an operation of an electronic device, according to an embodiment. The electronic device of FIG. 9 may include the electronic device 101 of FIG. 1 to FIG. 8. At least one of operations of FIG. 9 may be performed by the electronic device 101 and/or the processor 120 of FIG. 1.

Referring to FIG. 9, in an operation 910, the electronic device according to an embodiment may identify a touch input based on contact points exceeding the preset number based on data obtained from a touch sensor. The touch sensor may include the touch sensor 151 of FIG. 1. The preset number may include 3 to 4. The electronic device may identify whether the number of contact points exceeds the preset number based on a maximum value of indexes assigned to each of the contact points substantially simultaneously detected by the touch sensor. The data indicating each of the contact points may include a coordinate of a point in a touch sensing area formed by the touch sensor. The touch sensing area may correspond to a display area on a display (e.g., the display 140 of FIG. 1) of the electronic device.

Referring to FIG. 9, in an operation 920, the electronic device according to an embodiment may determine whether the touch input corresponds to a preset gesture. The electronic device may determine whether the touch input corresponding to the contact points corresponds to the preset gesture based on the number and/or coordinates of the contact points identified by the data of the operation 910. The preset gesture, which is a gesture for changing a brightness of at least a portion of the display, may include the gesture described above with reference to FIG. 3A to FIG. 3C. For example, the preset gesture may be performed by a body part (e.g., an edge of a hand and/or a palm) of a user covering at least a portion of the display 140. In case that the touch input does not correspond to the preset gesture (920-NO), the electronic device may refrain from changing the brightness of at least a portion of the display 140 based on the touch input.

In response to identifying the touch input corresponding to the preset gesture (920-YES), in an operation 930, according to an embodiment, the electronic device may change the brightness of at least a portion associated with the preset gesture to a second brightness different from a first brightness in a screen displayed in the display based on the first brightness. The preset gesture may include a gesture for changing the brightness of the at least a portion to the second brightness exceeding the first brightness, such as the first preset gesture described above with reference to FIG. 3A. In a state (e.g., the states 401 and 402 of FIG. 4A to FIG. 4B) in which the electronic device 101 displays a single screen corresponding to a single application, the at least a portion associated with the first preset gesture may correspond to a portion in which at least one of a plurality of visual objects included in the single screen is displayed. The at least one visual object may include a visual object of a preset type that is set to be emphasized over another visual object, such as multimedia content such as an image and/or a video, and a QR code (or a barcode). In a state in which the electronic device displays a plurality of screens corresponding to a plurality of applications, the at least a portion associated with the first preset gesture may correspond to a portion of a single screen displayed selected or focused by the user among the plurality of screens.

The preset gesture of the operation 920 may include a gesture for changing the brightness of at least a portion of the display to the second brightness less than the first brightness, such as the second preset gesture and/or the third preset gesture described above with reference to FIG. 3B to FIG. 3C. In a state (e.g., the state 501 of FIG. 5A, and the states 701 and 702 of FIG. 7A to FIG. 7B) in which the electronic device displays a single screen corresponding to a single application, the at least a portion associated with the second preset gesture and/or the third preset gesture may correspond to a portion in which at least one visual object is displayed among a plurality of visual objects included in the single screen. The at least one visual object may include a visual object of a preset type associated with privacy information, such as a text box in which text of a preset type is displayed, such as a password, a personal information number (PIN), a phone number, a plurality of icons for receiving an unlock pattern, and/or an image. The at least one visual object may include multimedia content such as an image and/or video. In a state (e.g., the state 502 of FIG. 5B and the state 703 of FIG. 7C) in which the electronic device displays a plurality of screens corresponding to a plurality of applications, the at least a portion associated with the second preset gesture and/or the third preset gesture may correspond to a portion of a single screen displayed selected or focused by the user among the plurality of screens.

In a state in which the brightness of at least a portion of the display is changed to the second brightness different from the first brightness based on the operation 930, the electronic device may restore the brightness of the at least a portion changed to the second brightness to the first brightness based on the gesture described above with reference to FIG. 8.

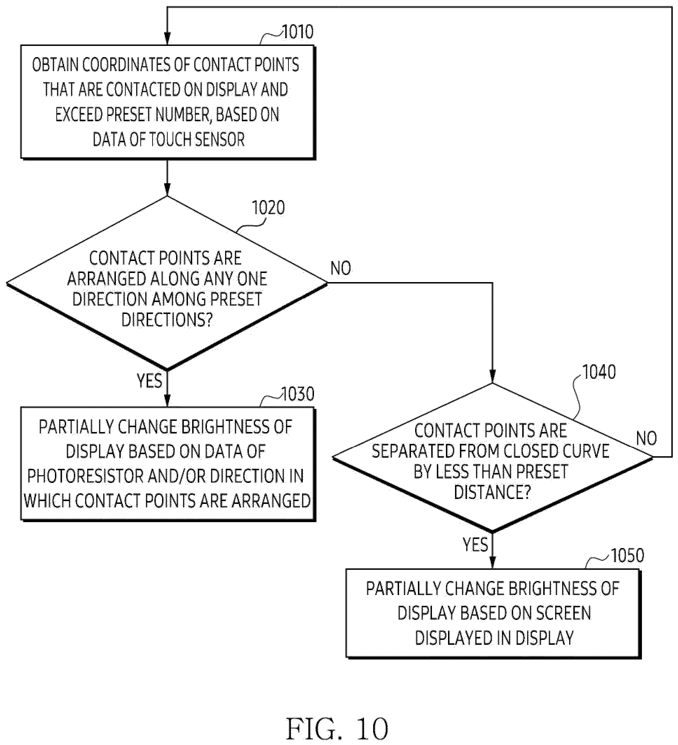

FIG. 10 illustrates an example of a flowchart for describing an operation of an electronic device, according to an embodiment. The electronic device of FIG. 10 may include the electronic device 101 of FIG. 1 to FIG. 8. At least one of operations of FIG. 10 may be performed by the electronic device 101 and/or the processor 120 of FIG. 1. At least one of the operations of FIG. 10 may be associated with at least one (e.g., the operation 910 of FIG. 9) of the operations of FIG. 9.

Referring to FIG. 10, in an operation 1010, the electronic device according to an embodiment may obtain coordinates of contact points that are contacted on a display and exceed the preset number, based on data of a touch sensor. For example, the electronic device may obtain the coordinates of the contact points exceeding three based on the data of the touch sensor.

Referring to FIG. 10, in an operation 1020, the electronic device according to an embodiment may identify whether the contact points are arranged along any one direction among preset directions. The preset directions may include a direction (e.g., a direction of an X-axis) parallel to a width of the display and/or a direction (e.g., a direction of a Y-axis) parallel to a height of the display. The electronic device may identify a direction of the contact points based on a difference (e.g., the differences 312,314, 322, and 324 of FIG. 3A to FIG. 3B) in coordinate values of the contact points.

In a state in which the contact points are arranged along any one direction of the preset directions (1020-YES), in an operation 1030, according to an embodiment, the electronic device may partially change a brightness of the display based on data of a photoresistor and/or a direction in which the contact points are arranged. In case that the contact points are arranged in the direction (e.g., the direction of the X-axis) parallel to the width of the display, such as the state 301 of FIG. 3A and/or the states 401 and 402 of FIG. 4A to FIG. 4B, the electronic device may change a brightness of at least a portion (e.g., the portion 410 of FIG. 4A) of the display based on the data of the photoresistor (e.g., the photoresistor 152 of FIG. 1). For example, the electronic device may partially change the brightness of the display based on identifying an illuminance exceeding a preset illuminance from the data of the photoresistor. When the contact points are arranged in the direction (e.g., the direction of the Y-axis) parallel to the height of the display, such as the state 302 of FIG. 3B and/or the states 702 and 703 of FIG. 7B to FIG. 7C, the electronic device may partially change the brightness of the display based on data of a hall sensor (e.g., the hall sensor 155 of FIG. 1). For example, based on a shape of the display identified based on the data of the hall sensor, the electronic device may select a portion in the display in which the brightness is to be adjusted. For example, a state after the electronic device partially changes the brightness of the display based on the operation 1030 may include the states 401 and 402 of FIG. 4A to FIG. 4B, the states 701, 702, and 703 of FIG. 7A to FIG. 7C, and/or the state 801 of FIG. 8.

In case that the contact points are not aligned in any direction among the preset directions (1020-NO), in an operation 1040, according to an embodiment, the electronic device may determine whether the contact points are separated from a closed curve by less than a preset distance. The closed curve may have a shape of an ellipse (e.g., the preset ellipse 335 of FIG. 3C) formed in the display. The electronic device may identify whether the contact points are included inside the closed curve, and/or distances of each of the contact points from the closed curve based on a parameter (e.g., the a and the b of the Equation 1) associated with the closed curve. As described above with reference to FIG. 3C, in case that at least one of the contact points is disposed outside the closed curve, or is separated from the closed curve by exceeding the preset distance (1040-NO), the electronic device may refrain from partially changing the brightness of the display based on the touch input associated with the contact points.

In a state in which the contact points are disposed in the preset distance from the closed curve (1040-yes), in an operation 1050, according to an embodiment, the electronic device may partially change the brightness of the display based on a screen displayed in the display. For example, in case that all of the contact points are disposed inside the closed curve and arranged in a shape of the closed curve, the electronic device may partially change the brightness of the display based on the operation 1050. The state after the electronic device partially changes the brightness of the display based on the operation 1050 may include the states 501 and 502 of FIG. 5A to FIG. 5B.

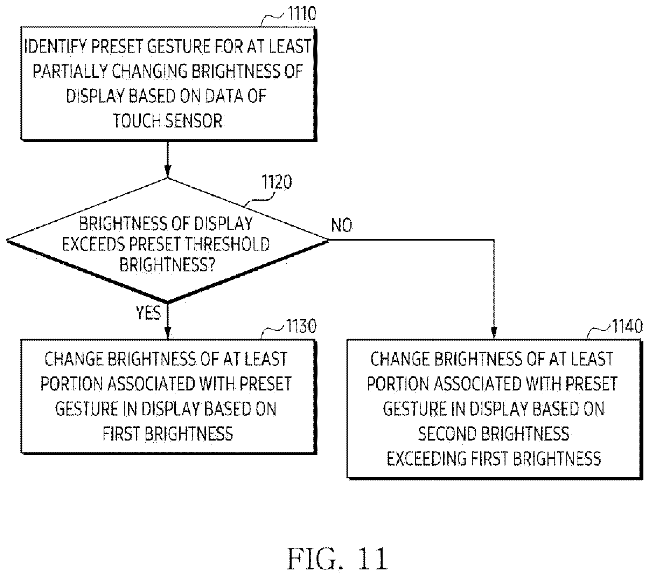

FIG. 11 illustrates an example of a flowchart for describing an operation of an electronic device, according to an embodiment. The electronic device of FIG. 11 may include the electronic device 101 of FIG. 1 to FIG. 8. At least one of operations of FIG. 11 may be performed by the electronic device 101 and/or the processor 120 of FIG. 1. At least one of the operations of FIG. 11 may be associated with at least one of the operations (e.g., the operation 930 of FIG. 9 and/or the operations 1030 and 1050 of FIG. 10) of the electronic device of FIG. 9 to FIG. 10.

Referring to FIG. 11, in an operation 1110, the electronic device according to an embodiment may identify a preset gesture for at least partially changing a brightness of a display based on data of a touch sensor. The preset gesture may include the first preset gesture of FIG. 3A to FIG. 3B. The electronic device may identify the preset gesture based on the operations 910 and 920 of FIG. 9 and the operations 1010, 1020, and 1040 of FIG. 10.

In a state in which the preset gesture is identified, in an operation 1120, according to an embodiment, the electronic device may determine whether the brightness of the display exceeds a preset threshold brightness. The threshold brightness may be selected among discretely separated brightness levels. The threshold brightness may be selected within a range of a reference voltage inputted to a pixel of the display. The threshold brightness may be set as a numerical value in a percentage unit within a range of brightness that is displayable by the pixel of the display.

In a state in which the brightness of the display exceeds the preset threshold brightness (1120-YES), in an operation 1130, according to an embodiment, the electronic device may change a brightness of at least a portion associated with the preset gesture in the display based on a first brightness. The first brightness, which is a degree for changing the brightness of the display, may be set based on the brightness level, magnitude of the reference voltage, and/or the numerical value in the percentage unit. In case that the preset gesture of the operation 1110 is the first preset gesture for partially increasing the brightness of the display of FIG. 3A, the electronic device may partially increase the brightness of the display based on the first brightness in a brightness less than or equal to a maximum brightness. In case that the preset gesture of the operation 1110 is the second preset gesture and/or the third preset gesture for partially reducing the brightness of the display of FIG. 3B to FIG. 3C, the electronic device may partially reduce the brightness of the display based on the first brightness in a brightness greater than or equal to a minimum brightness.

In a state in which the brightness of the display is less than or equal to the preset threshold brightness (1120-NO), in an operation 1140, according to an embodiment, the electronic device may change the brightness of the at least a portion associated with the preset gesture in the display based on a second brightness exceeding the first brightness. In case that the preset gesture of the operation 1110 is the first preset gesture for partially increasing the brightness of the display of FIG. 3A, the electronic device may partially increase the brightness of the display based on the second brightness in the brightness less than or equal to the maximum brightness. In case that the preset gesture of the operation 1110 is the second preset gesture and/or the third preset gesture for partially reducing the brightness of the display of FIG. 3B to FIG. 3C, the electronic device may partially reduce the brightness of the display based on the first brightness in the brightness greater than or equal to the minimum brightness. In the operation 1140, since the brightness of at least a portion of the display is changed based on the second brightness exceeding the first brightness, the electronic device may drastically change the brightness of at least a portion of the display than the operation 1130.

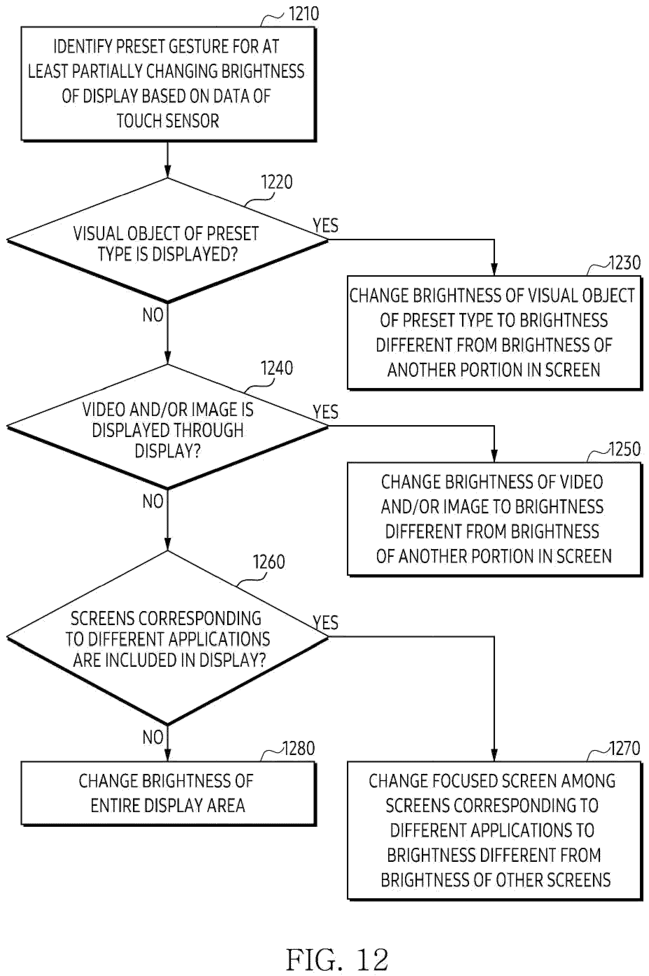

FIG. 12 illustrates an example of a flowchart for describing an operation of an electronic device, according to an embodiment. The electronic device of FIG. 12 may include the electronic device 101 of FIG. 1 to FIG. 8. At least one of operations of FIG. 12 may be performed by the electronic device 101 and/or the processor 120 of FIG. 1. At least one of the operations of FIG. 12 may be associated with at least one of the operations of FIG. 9 to FIG. 11.

Referring to FIG. 12, in an operation 1210, the electronic device according to an embodiment may identify a preset gesture for at least partially changing a brightness of a display based on data of a touch sensor. The electronic device may perform the operation 1210 of FIG. 12, similar to the operations 910 and 920 of FIG. 9, the operations 1010, 1020, and 1040 of FIG. 10, and/or the operation 1110 of FIG. 11. The preset gesture may include the first preset gesture to the third preset gesture described above with reference to FIG. 3A to FIG. 3C.

In a state of identifying the preset gesture, in an operation 1220, according to an embodiment, the electronic device may determine whether a visual object of a preset type is displayed. The visual object of the preset type may include a visual object to be emphasized in the display, such as a QR code and/or a barcode. The visual object of the preset type may include privacy information, such as an unlock pattern, a password, an ID, and/or a PIN.

In a state in which the visual object of the preset type is displayed (1220-YES), in an operation 1230, according to an embodiment, the electronic device may change a brightness of the visual object of the preset type to a brightness different from a brightness of another portion in a screen. For example, a brightness of a portion in which the visual object of the preset type is displayed may be increased or decreased than the brightness of the other portion.

In case that the visual object of the preset type is not displayed (1220-NO), in an operation 1240, according to an embodiment, the electronic device may determine whether a video and/or an image is displayed through the display. For example, the electronic device may determine whether multimedia content including the video and/or the image is displayed in the display.

In a state in which the video and/or the image is displayed (1240-YES), in an operation 1250, the electronic device according to an embodiment may change a brightness of the video and/or the image to a brightness different from a brightness of another portion in the screen. For example, the video, and/or the image may be emphasized (e.g., the state 202 of FIG. 2).

In case that the video or/or the image is not displayed (1240-NO), in an operation 1260, the electronic device according to an embodiment may determine whether screens corresponding to different applications are included in the display. For example, based on applications substantially simultaneously executed by the electronic device, the electronic device may identify the screens corresponding to the applications.

In a state in which the screens corresponding to the different applications are included in the display (1260-YES), in an operation 1270, according to an embodiment, the electronic device may change a focused screen among the screens corresponding to the different applications to a brightness different from a brightness of other screens. The state 502 of FIG. 5B and/or the state 703 of FIG. 7C may include a state after changing a brightness of a specific screen based on the operation 1270.

In a state in which a single screen based on execution of a single application is displayed in the display (1260-NO), in an operation 1280, according to an embodiment, the electronic device may change a brightness of an entire display area. In case that a screen corresponding to an application and occupying the entire display does not include a visual object, a video, or an image of a preset type, the electronic device may change the brightness of the entire display area of the display based on the preset gesture in the operation 1210.

As described above, the electronic device according to an embodiment may change the brightness of at least a portion of the display differently from a brightness of another portion based on a gesture partially covering the display. The gesture may include a gesture for compensating for reduced visibility of the display due to ambient light, a gesture for reducing the number of users looking at the display, and/or a gesture for covering the display. The electronic device may preferentially change a brightness of a portion in which multimedia content such as an image and/or a video, and privacy information such as an unlock pattern and/or a PIN are displayed in the display.

Based on an intuitively performed a gesture for adjusting a brightness of a display, a method for changing a brightness of at least a portion of the display may be required. As described above, according to an embodiment, an electronic device (e.g., the electronic device 101 of FIGS. 1 to 8) may comprise a display (e.g., the display 140 of FIGS. 1 to 8), a touch sensor (e.g., the touch sensor 151 of FIG. 1), memory storing instructions, and a processor (e.g., the processor 120 of FIG. 1). The instructions may be configured to, when executed by the processor, cause the electronic device to obtain data from the touch sensor, while displaying a screen based on a first brightness in the display. The instructions may be configured to, when executed by the processor, cause the electronic device to identify, based on at least one contact point associated with a touch input performed on the display that is identified by the data, whether the touch input is corresponding to a preset gesture to adjust the first brightness of the display. The instructions may be configured to, when executed by the processor, cause the electronic device to, based on identifying the touch input corresponding to the preset gesture, change, among a plurality of visual objects included in the screen, a brightness of a first portion where at least one first visual object (e.g., the visual object 230 of FIG. 2) having a preset type to a second brightness different from the first brightness. According to an embodiment, the electronic device may respond to the gesture intuitively performed for adjusting the brightness of the display.

For example, the instructions may be configured to, when executed by the processor, cause the electronic device to change, in a state that the touch input is corresponding to the preset gesture identified based on the contact points greater than a preset number which are arranged along a preset direction, a brightness of the first portion to the second brightness greater than the first brightness.

For example, the electronic device may further comprise a photoresistor (e.g., the photoresistor 152 of FIG. 1). The instructions may be configured to, when executed by the processor, cause the electronic device to obtain, in the state, whether to change the brightness of the first portion to the second brightness based on data outputted from the photoresistor.

For example, the electronic device may further comprise an accelerometer (e.g., the accelerometer 154 of FIG. 1). The instructions may be configured to, when executed by the processor, cause the electronic device to obtain, in the state, whether to change the brightness of the first portion to the second brightness based on whether a direction of the display is directed to a preset direction that is identified by data outputted from the accelerometer.

For example, the instructions may be configured to, when executed by the processor, cause the electronic device to identify, based on the preset type to classify at least one of a quick response (QR) code, an image, a video, or a software keyboard, the at least one first visual object among the plurality of visual objects included in the screen.

For example, the instructions may be configured to, when executed by the processor, cause the electronic device to change, in another state that the touch input is corresponding to another preset gesture identified based on the contact points arranged along another direction which is perpendicular to the preset direction, a brightness of the screen to a third brightness lower than the first brightness.

For example, the electronic device may further comprise a Hall sensor (e.g., the hall sensor 155 of FIG. 1). The instructions may be configured to, when executed by the processor, cause the electronic device to identify data associated with the display which is a flexible display that is foldable along a folding axis, from the Hall sensor. The instructions may be configured to, when executed by the processor, cause the electronic device to, based on identifying the data indicating that the display is folded along the folding axis by a preset angle range from the Hall sensor in the another state, change a brightness of a second portion different from the first portion including the contact points among portions of the display distinguished by the folding axis, to the third brightness, and maintain the brightness of the first portion as the first brightness.

For example, the instructions may be configured to, when executed by the processor, cause the electronic device to change, in a state that the touch input is corresponding to the preset gesture identified based on the contact points greater than a preset number which are arranged along a closed curve, the brightness of the first portion to the second portion lower than the first portion.

For example, the instructions may be configured to, when executed by the processor, cause the electronic device to identify, based on a preset closed curve formed in the display, and distances between the contact points, whether the contact points are corresponding to the preset gesture.

For example, the instructions may be configured to, when executed by the processor, cause the electronic device to identify, based on the preset type for classifying at least one of a text box to receive a password, an image, or a video, the at least one first visual object among the plurality of visual objects.

For example, the instructions may be configured to, when executed by the processor, cause the electronic device to identify, based on differences of coordinates in axes which are perpendicular to each other, whether the touch input is corresponding to the preset gesture.

As described above, according to an embodiment, a method of an electronic device may comprise obtaining, while displaying a screen based on a first brightness in a display of the electronic device, data from a touch sensor of the electronic device. The method may comprise identifying, based on the data, a preset gesture for at least partially covering the display. The method may comprise changing, based on identifying the preset gesture in a first state that the display is folded along a folding axis in a preset angle range, a brightness of a first portion among portions of the display distinguished by the folding axis, to a second brightness different from the first brightness. The method may comprise changing, based on identifying the preset gesture in a second state different from the first state, brightness of all of the portions to the second brightness.

For example, the obtaining the data may comprise identifying, based on the data, at least one contact point contacted on the display.

For example, the identifying the preset gesture may comprise identifying, based on identifying contact points greater than a preset number, the preset gesture based on coordinates of the contact points.

For example, the changing the brightness in the first state may comprise changing a brightness of the first portion different from a second portion among the portions, the second portion is covered by the preset gesture.

For example, the changing the brightness in the first state may comprise changing, among a plurality of visual objects which are displayed through the first portion based on the screen, a brightness of at least one visual object included in a preset type, to the second brightness.

For example, the changing the brightness of the at least one visual object may comprise identifying the at least one visual object among the plurality of visual objects based on the preset type for classifying at least one of a text box to receive a password, an image, or a video.

As described above, according to an embodiment, a method of an electronic device may comprise obtaining, while displaying a screen based on a first brightness in a display of the electronic device, data from a touch sensor of the electronic device. The method may comprise identifying, based on at least one contact point associated with a touch input performed on the display that is identified by the data, whether the touch input is corresponding to a preset gesture to adjust the first brightness of the display. The method may comprise, based on identifying that the touch input is corresponding to a preset gesture to adjust the first brightness of the display, based on identifying the touch input corresponding to the preset gesture, changing, among a plurality of visual objects included in the screen, a brightness of a first portion where at least one first visual object having a preset type to a second brightness different from the first brightness.

For example, the changing may comprise changing, in a state that the touch input is corresponding to the preset gesture identified based on the contact points greater than a preset number which are arranged along a preset direction, a brightness of the first portion to the second brightness greater than the first brightness.

For example, the changing may comprise obtaining, in the state, whether to change a brightness of the first portion to the second brightness based on data outputted from a photoresistor of the electronic device.

For example, the changing may comprise obtaining, in the state, whether to change a brightness of the first portion to the second brightness based on whether a direction of the display is directed to a preset direction that is identified by data outputted from an accelerometer of the electronic device.

For example, the changing may comprise changing, in another state that the touch input is corresponding to another preset gesture identified based on the contact points arranged along another direction which is perpendicular to the preset direction, a brightness of the screen to a third brightness lower than the first brightness.

For example, the changing may comprise changing, in a state that the touch input is corresponding to the preset gesture identified based on the contact points greater than a preset number which are arranged along a closed curve, the brightness of the first portion to the second brightness lower than the first brightness.

For example, the changing may comprise identifying, based on a preset closed curve formed in the display, and distances between the contact points, whether the contact points are corresponding to the preset gesture.

For example, the changing may comprise identifying, based on the preset type to classify at least one of a quick response (QR) code, an image, a video, or a software keyboard, the at least one first visual object among the plurality of visual objects included in the screen.

As described above, according to an embodiment, an electronic device (e.g., the electronic device 101 of FIGS. 1 to 8) may comprise a display (e.g., the display 140 of FIGS. 1 to 8), a touch sensor (e.g., the touch sensor 151 of FIG. 1), and a processor (e.g., the processor 120 of FIG. 1). The instructions may be configured to, when executed by the processor, cause the electronic device to obtain, while displaying a screen based on a first brightness in a display, data from a touch sensor. The instructions may be configured to, when executed by the processor, cause the electronic device to identify, based on the data, a preset gesture for at least partially covering the display. The instructions may be configured to, when executed by the processor, cause the electronic device to change, based on identifying the preset gesture in a first state that the display is folded along a folding axis in a preset angle range, a brightness of a first portion among portions of the display distinguished by the folding axis, to a second brightness different from the first brightness. The instructions may be configured to, when executed by the processor, cause the electronic device to change, based on identifying the preset gesture in a second state different from the first state, brightness of all of the portions to the second brightness.

For example, the instructions may be configured to, when executed by the processor, cause the electronic device to identify, based on the data, at least one contact point contacted on the display. The instructions may be configured to, when executed by the processor, cause the electronic device to identify, based on identifying contact points greater than a preset number, the preset gesture based on coordinates of the contact points.

For example, the instructions may be configured to, when executed by the processor, cause the electronic device to change brightness of the first portion different from a second portion among the portions, the second portion is covered by the preset gesture in the first state.

For example, the instructions may be configured to, when executed by the processor, cause the electronic device to change, among a plurality of visual objects which are displayed through the first portion based on the screen, a brightness of at least one visual object included in a preset type, to the second brightness.

For example, the electronic device may further comprise a Hall sensor (e.g., the hall sensor 155 of FIG. 1). The instructions may be configured to, when executed by the processor, cause the electronic device to select a state of the electronic device among the first state and the second state by comparing an angle of the display folded by the folding axis with the preset angle range.

According to an embodiment, an electronic device may include a display, a touch sensor, and a processor. The instructions may be configured to, when executed by the processor, cause the electronic device to obtain, while displaying a screen based on a first brightness in a display, data from a touch sensor. The instructions may be configured to, when executed by the processor, cause the electronic device to, in response to identifying a touch input based on contact points exceeding a preset number based on the data, obtain coordinates of the contact points associated with the touch input based on the data. The instructions may be configured to, when executed by the processor, cause the electronic device to, based on identifying that the touch input is corresponding to a preset gesture to adjust the first brightness of the display, based on the obtained coordinates, change, among a plurality of visual objects included in the screen, a brightness of a first portion where at least one first visual object having a preset type to a second brightness different from the brightness.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

**Claims**

1.   An electronic device, comprising:

> a display;
> a touch sensor;
> memory storing instructions; and
> a processor, wherein the instructions are configured to, when executed by the processor, cause the electronic device to:
>
> > obtain data from the touch sensor, while displaying a screen based on a first brightness in the display;
> > identify, based on at least one contact point associated with a touch input performed on the display that is identified by the data, whether the touch input is corresponding to a preset gesture to adjust the first brightness of the display; and
> > based on identifying the touch input corresponding to the preset gesture, change, among a plurality of visual objects included in the screen, a brightness of a first portion where at least one first visual object having a preset type to a second brightness different from the first brightness.

2.   The electronic device of claim 1, wherein the instructions are configured to, when executed by the processor, cause the electronic device to:
change, in a state that the touch input is corresponding to the preset gesture identified based on the contact points greater than a preset number, which are arranged along a preset direction, the brightness of the first portion to the second brightness greater than the first brightness.

3.   The electronic device of any one of claim 1 to claim 2, further comprising:

a photoresistor, and
wherein the instructions are configured to, when executed by the processor, cause the electronic device to:
obtain, in the state, whether to change the brightness of the first portion to the second brightness based on data outputted from the photoresistor.

4. The electronic device of any one of claim 1 to claim 3, further comprising,

an accelerometer; and
wherein the instructions are configured to, when executed by the processor, cause the electronic device to:
obtain, in the state, whether to change the brightness of the first portion to the second brightness, based on whether a direction of the display is directed to a preset direction that is identified by data outputted from the accelerometer.

5. The electronic device of any one of claim 1 to claim 4, wherein the instructions are configured to, when executed by the processor, cause the electronic device to:
identify, based on the preset type to classify at least one of a quick response (QR) code, an image, a video, or a software keyboard, the at least one first visual object among the plurality of visual objects included in the screen.

6. The electronic device of any one of claim 1 to claim 5, wherein the instructions are configured to, when executed by the processor, cause the electronic device to:
change, in another state that the touch input is corresponding to another preset gesture identified based on the contact points arranged along another direction which is perpendicular to the preset direction, a brightness of the screen to a third brightness lower than the first brightness.

7. The electronic device of any one of claim 1 to claim 6, further comprising,

a Hall sensor,
wherein the instructions are configured to, when executed by the processor, cause the electronic device to:

identify data associated with the display, which is a flexible display that is foldable along a folding axis, from the Hall sensor; and
based on identifying the data indicating that the display is folded along the folding axis by a preset angle range from the Hall sensor in the another state, change a brightness of a second portion different from the first portion including the contact points among portions of the display distinguished by the folding axis, to the third brightness, and maintain the brightness of the first portion as the first brightness.

8. The electronic device of any one of claim 1 to claim 7, wherein the instructions are configured to, when executed by the processor, cause the electronic device to:
change, in a state that the touch input is corresponding to the preset gesture identified based on the contact points greater than a preset number, which are arranged along a closed curve, the brightness of the first portion to the second brightness lower than the first brightness.

9. The electronic device of any one of claim 1 to claim 8, wherein the instructions are configured to, when executed by the processor, cause the electronic device to:
identify, based on a preset closed curve formed in the display, and distances between the contact points, whether the contact points are corresponding to the preset gesture.

10. The electronic device of any one of claim 1 to claim 9, wherein the instructions are configured to, when executed by the processor, cause the electronic device to:
identify, based on the preset type for classifying at least one of a text box to receive a password, an image, or a video, the at least one first visual object among the plurality of visual objects.

11. The electronic device of any one of claim 1 to claim 10, wherein the instructions are configured to, when executed by the processor, cause the electronic device to:
identify, based on differences of coordinates in axes which are perpendicular to each other, whether the touch input is corresponding to the preset gesture.

12. A method of an electronic device, comprising:

obtaining, while displaying a screen based on a first brightness in a display of the electronic device, data from a touch sensor of the electronic device;

identifying, based on the data, a preset gesture for at least partially covering the display;

changing, based on identifying the preset gesture in a first state that the display is folded along a folding axis in a preset angle range, a brightness of a first portion among portions of the display distinguished by the folding axis, to a second brightness different from the first brightness; and

changing, based on identifying the preset gesture in a second state different from the first state, brightness of all of the portions to the second brightness.

13. The method of claim 12, wherein the obtaining the data comprising,

identifying, based on the data, at least one contact point contacted on the display.

14. The method of any one of claim 12 to claim 13, wherein the identifying the preset gesture comprising,

identifying, based on identifying contact points greater than a preset number, the preset gesture based on coordinates of the contact points.

15. A non-transitory computer readable storage medium including instructions, wherein the instructions which, when executed by an electronic device including a touch sensor, a display, and a processor, cause the electronic device to:

obtain data from the touch sensor, while displaying a screen based on a first brightness in the display;

identify, based on at least one contact point associated with a touch input performed on the display that is identified by the data, whether the touch input is corresponding to a preset gesture to adjust the first brightness of the display; and

based on identifying the touch input corresponding to the preset gesture, change, among a plurality of visual objects included in the screen, a brightness of a first portion where at least one first visual object having a preset type to a second brightness different from the first brightness.

110

ELECTRONIC DEVICE (101)

PROCESSOR (120)

MEMORY (130)

DISPLAY (140)

COMMUNICATION CIRCUITRY (160)

SENSOR (150)

TOUCH SENSOR (151)

PHOTORESISTOR (152)

GPS SENSOR (153)

ACCELEROMETER (154)

HALL SENSOR (155)

FIG. 1

FIG. 2

FIG. 3A

FIG. 3B

FIG. 3C

FIG. 4A

FIG. 4B

140

101

R1

USER AUTHENTICATION

ENTER YOUR PERSONAL
INFORMATION

330

R5

R2

[ PHONE NUMBER [ OK ] ]

510

424

420

422   APPLY AUTOMATIC GESTURE
BRIGHTNESS CONTROL

R4

426

R3

501

FIG. 5A

FIG. 5B

FIG. 6

FIG. 7A

FIG. 7B

FIG. 7C

FIG. 8

~910

IDENTIFY TOUCH INPUT BASED ON CONTACT POINTS
EXCEEDING PRESET NUMBER BASED ON DATA
OBTAINED FROM TOUCH SENSOR

920

TOUCH INPUT CORRESPONDS
TO PRESET GESTURE?

NO

YES

~930

CHANGE BRIGHTNESS OF AT LEAST PORTION
ASSOCIATED WITH PRESET GESTURE TO SECOND
BRIGHTNESS DIFFERENT FROM FIRST BRIGHTNESS IN
SCREEN DISPLAYED IN DISPLAY BASED ON
FIRST BRIGHTNESS

FIG. 9

1010

OBTAIN COORDINATES OF CONTACT POINTS THAT ARE CONTACTED ON DISPLAY AND EXCEED PRESET NUMBER, BASED ON DATA OF TOUCH SENSOR

1020

CONTACT POINTS ARE ARRANGED ALONG ANY ONE DIRECTION AMONG PRESET DIRECTIONS?

NO

YES

1030

PARTIALLY CHANGE BRIGHTNESS OF DISPLAY BASED ON DATA OF PHOTORESISTOR AND/OR DIRECTION IN WHICH CONTACT POINTS ARE ARRANGED

1040

CONTACT POINTS ARE SEPARATED FROM CLOSED CURVE BY LESS THAN PRESET DISTANCE?

NO

YES

1050

PARTIALLY CHANGE BRIGHTNESS OF DISPLAY BASED ON SCREEN DISPLAYED IN DISPLAY

FIG. 10

IDENTIFY PRESET GESTURE FOR AT LEAST
PARTIALLY CHANGING BRIGHTNESS OF
DISPLAY BASED ON DATA OF
TOUCH SENSOR
~1110

BRIGHTNESS OF DISPLAY
EXCEEDS PRESET THRESHOLD
BRIGHTNESS?
1120

NO

YES

CHANGE BRIGHTNESS OF AT LEAST
PORTION ASSOCIATED WITH PRESET
GESTURE IN DISPLAY BASED ON
FIRST BRIGHTNESS
~1130

CHANGE BRIGHTNESS OF AT LEAST
PORTION ASSOCIATED WITH PRESET
GESTURE IN DISPLAY BASED ON
SECOND BRIGHTNESS
EXCEEDING FIRST BRIGHTNESS
~1140

FIG. 11

1210

IDENTIFY PRESET GESTURE FOR AT
LEAST PARTIALLY CHANGING BRIGHTNESS
OF DISPLAY BASED ON DATA OF
TOUCH SENSOR

1220

VISUAL OBJECT OF PRESET
TYPE IS DISPLAYED?

YES

1230

CHANGE BRIGHTNESS OF VISUAL OBJECT
OF PRESET TYPE TO BRIGHTNESS
DIFFERENT FROM BRIGHTNESS OF
ANOTHER PORTION IN SCREEN

NO

1240

VIDEO AND/OR IMAGE IS
DISPLAYED THROUGH
DISPLAY?

YES

1250

CHANGE BRIGHTNESS OF VIDEO
AND/OR IMAGE TO BRIGHTNESS
DIFFERENT FROM BRIGHTNESS
OF ANOTHER PORTION IN SCREEN

NO

1260

SCREENS CORRESPONDING
TO DIFFERENT APPLICATIONS
ARE INCLUDED IN DISPLAY?

YES

NO

1280

CHANGE BRIGHTNESS OF
ENTIRE DISPLAY AREA

1270

CHANGE FOCUSED SCREEN AMONG
SCREENS CORRESPONDING TO
DIFFERENT APPLICATIONS TO
BRIGHTNESS DIFFERENT FROM
BRIGHTNESS OF OTHER SCREENS

FIG. 12

## INTERNATIONAL SEARCH REPORT

| | International application No. |
|---|---|
| | **PCT/KR2023/013606** |

### A. CLASSIFICATION OF SUBJECT MATTER

**G06F 3/04883**(2022.01)i; **G06F 3/041**(2006.01)i; **H04M 1/72448**(2021.01)i

According to International Patent Classification (IPC) or to both national classification and IPC

### B. FIELDS SEARCHED

Minimum documentation searched (classification system followed by classification symbols)

G06F 3/04883(2022.01); G06F 3/0481(2013.01); G06F 3/0484(2013.01); G06F 3/0488(2013.01); G06F 3/16(2006.01); G09F 9/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴더블 디스플레이(foldable display), 터치 센서(touch sensor), 밝기 조절 (brightness control), 제스처(gesture), 조도 센서(illumination sensor) 및 가속도 센서(acceleration sensor)

### C. DOCUMENTS CONSIDERED TO BE RELEVANT

| Category* | Citation of document, with indication, where appropriate, of the relevant passages | Relevant to claim No. |
|---|---|---|
| Y | KR 10-2016-0089646 A (LG ELECTRONICS INC.) 28 July 2016 (2016-07-28)<br>See paragraphs [0027]-[0198] and figures 1a-14. | 1-15 |
| Y | US 2022-0019336 A1 (LG ELECTRONICS INC.) 20 January 2022 (2022-01-20)<br>See paragraphs [0242]-[0256] and figures 14-15C. | 1-15 |
| Y | KR 10-2014-0147253 A (LG ELECTRONICS INC.) 30 December 2014 (2014-12-30)<br>See paragraphs [0023]-[0026] and [0128]-[0132] and figures 1 and 4-11. | 4,7,12-14 |
| A | KR 10-2019-0128139 A (HIDEEP INC.) 15 November 2019 (2019-11-15)<br>See paragraph [0112] and figure 14. | 1-15 |
| A | US 2016-0054907 A1 (SMARTISAN DIGITAL CO., LTD.) 25 February 2016 (2016-02-25)<br>See paragraphs [0051]-[0087] and figures 1-3. | 1-15 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 December 2023** | **21 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/013606**

| Patent document cited in search report | | | Publication date (day/month/year) | Patent family member(s) | | | Publication date (day/month/year) |
|---|---|---|---|---|---|---|---|
| KR | 10-2016-0089646 | A | 28 July 2016 | None | | | |
| US | 2022-0019336 | A1 | 20 January 2022 | EP | 3940522 | A1 | 19 January 2022 |
| | | | | US | 11416114 | B2 | 16 August 2022 |
| | | | | WO | 2022-014740 | A1 | 20 January 2022 |
| KR | 10-2014-0147253 | A | 30 December 2014 | CN | 105324807 | A | 10 February 2016 |
| | | | | CN | 105324807 | B | 02 November 2018 |
| | | | | EP | 3011551 | A1 | 27 April 2016 |
| | | | | EP | 3011551 | B1 | 22 November 2017 |
| | | | | EP | 3301663 | A1 | 04 April 2018 |
| | | | | EP | 3301663 | B1 | 26 May 2021 |
| | | | | KR | 10-2081931 | B1 | 26 February 2020 |
| | | | | US | 2014-0375219 | A1 | 25 December 2014 |
| | | | | US | 2016-0012797 | A1 | 14 January 2016 |
| | | | | US | 9183770 | B2 | 10 November 2015 |
| | | | | US | 9747868 | B2 | 29 August 2017 |
| | | | | WO | 2014-204047 | A1 | 24 December 2014 |
| KR | 10-2019-0128139 | A | 15 November 2019 | JP | 2020-518914 | A | 25 June 2020 |
| | | | | KR | 10-2044824 | B1 | 15 November 2019 |
| | | | | US | 2020-0089362 | A1 | 19 March 2020 |
| | | | | WO | 2018-236047 | A1 | 27 December 2018 |
| US | 2016-0054907 | A1 | 25 February 2016 | CN | 103197889 | A | 10 July 2013 |
| | | | | CN | 103197889 | B | 08 February 2017 |
| | | | | US | 9772760 | B2 | 26 September 2017 |
| | | | | WO | 2014-161363 | A1 | 09 October 2014 |

Form PCT/ISA/210 (patent family annex) (July 2022)